# EUROPÄISCHE PATENTSCHRIFT

(11) **EP 4 223 649 B1**
(45) Veröffentlichungstag und Bekanntmachung des Hinweises auf die Patenterteilung: **18.09.2024**
(21) Anmeldenummer: 23153586.5
(22) Anmeldetag: 27.01.2023
(51) Int. Cl.: B64G 1/22, B64G 1/40, B64G 1/44, B64G 1/66

(54) **RAUMFAHRZEUGMEMBRAN-KOPPLUNGSEINRICHTUNG UND RAUMFAHRZEUGMEMBRANEINHEIT**
SPACECRAFT MEMBRANE COUPLING DEVICE AND SPACECRAFT MEMBRANE UNIT
DISPOSITIF DE COUPLAGE DE DIAPHRAGME D'ENGIN SPATIAL ET UNITÉ DE DIAPHRAGME D'ENGIN SPATIAL

(30) Priorität: 02.02.2022 DE 102022102420
(43) Veröffentlichungstag der Anmeldung: 09.08.2023
(73) Patentinhaber: Deutsches Zentrum für Luft- und Raumfahrt e.V., 53227 Bonn (DE)
(72) Erfinder: SEEFELDT, Patric, 28359 Bremen (DE); CARDONE, Tiziana, 2200 AG Noordwijk (NL)
(74) Vertreter: REHBERG HÜPPE + PARTNER

(56) Entgegenhaltungen:
- DE-A1- 102017 101 180
- DE-A1- 102018 117 993
- JP-A- 2005 217 696
- US-A1- 2019 071 191
- US-A1- 2021 229 840
- US-B1- 9 550 584
- SPROEWITZ TOM ET AL: "Membrane Deployment Technology Development at DLR for Solar Sails and Large-Scale Photovoltaics", 2019 IEEE AEROSPACE CONFERENCE, IEEE, 2 March 2019 (2019-03-02), pages 1 - 20, XP033561597, DOI: 10.1109/AERO.2019.8741630

## Beschreibung

### TECHNISCHES GEBIET DER ERFINDUNG

Die Erfindung betrifft eine Raumfahrzeugmembran-Kopplungseinrichtung, die dazu dient, eine Raumfahrzeugmembran an einem Raumfahrzeug zu befestigen, halten und/oder aufzuspannen.

An Raumfahrzeugen kommen Raumfahrzeugmembranen in unterschiedlichen Funktionen zum Einsatz. Beispielsweise finden Raumfahrzeugmembranen als Sonnensegel, als Antennen, als sogenannte "Dragsails", als Sunshields (vgl. https://www.youtube.com/watch?v=A58qMscr9ys oder https://www.youtube.com/watch?v=sM N1IzM3gU) oder als großflächige Trägerstrukturen für Photovoltaikzellen Einsatz, wobei in einer Raumfahrzeugmembran auch die genannten Funktionen kombiniert sein können. Die Raumfahrzeugmembran wird gewöhnlich kompakt zu einer Raumfahrzeugmembranpackung gepackt, wobei das Packen ein Falten oder Wickeln oder eine Kombination davon sein kann. Die entstandene Raumfahrzeugmembranpackung wird dann platzsparend an dem Raumfahrzeug verstaut. Erst wenn das Raumfahrzeug den Weltraum erreicht hat, wird die Raumfahrzeugmembranpackung entpackt, wozu mittels eines Entpackelements (beispielsweise ein ausfahrbarer Mast) Entpackkräfte über eine Raumfahrzeugmembran-Kopplungseinrichtung auf die Raumfahrzeugmembran übertragen werden müssen, um das Entpacken herbeizuführen.

Des Weiteren betrifft die Erfindung eine Raumfahrzeugmembraneinheit mit einer Raumfahrzeugmembran und einer Raumfahrzeugmembran-Kopplungseinrichtung der zuvor genannten Art.

### STAND DER TECHNIK

Aus den Veröffentlichungen
F. D. Vedova, H. Henrion, M. Leipold, et al., "The solar sail materials (ssm) project status of activities", Advances in Space Research, Vol. 48, pp. 1922, 1926, 2011
   und
F.D. Vedover, D. de Wilde, C. Semprimoschnig, et al., "The solar sail materials (ssm) project- results of activities", Advances in Solar Sailing, 2014
sind Raumfahrzeugmembran-Kopplungseinrichtungen bekannt, die hier auch als "Sail-to-Structure Interfaces" (abgekürzt "SSIF") bezeichnet sind. Die hier dargestellten Raumfahrzeugmembran-Kopplungseinrichtungen weisen Lagerösen und ein an die Lagerösen angeschlagenes Zugseil auf. Die Lagerösen sind mit verstärkten Ecken der Raumfahrzeugmembran vernietet, oder als dreieckige oder schlaufenförmige Ösen, die in Umfaltungen der Verstärkungen der Ecken der Raumfahrzeugmembran eingebunden sind, ausgebildet.

Aus der JP 2005 217696 A ist ebenfalls eine Raumfahrzeugmembran-Kopplungseinrichtung bekannt.

### AUFGABE DER ERFINDUNG

Der vorliegenden Erfindung liegt die Aufgabe zugrunde, eine Raumfahrzeugmembran-Kopplungseinrichtung sowie eine Raumfahrzeugmembraneinheit vorzuschlagen, die insbesondere hinsichtlich
- der Festigkeit,
- der Kraftübertragung und Krafteinleitung in die Raumfahrzeugmembran,
- dem Packen der Raumfahrzeugmembran und der damit verbundenen Raumfahrzeugmembran-Kopplungseinrichtung sowie dem Entpacken und/oder
- der Gewährleistung der unterschiedlichen Ausrichtungen der der Raumfahrzeugmembran-Kopplungseinrichtung zugeordneten Ecke der Raumfahrzeugmembran gegenüber einem Entpackungselement
zu verbessern.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt eine Raumfahrzeugmembran-Kopplungseinrichtung vor, die zum Befestigen, Halten und/oder Auspannen einer Raumfahrzeugmembran dient. Die erfindungsgemäße Raumfahrzeugmembran-Kopplungseinrichtung verfügt einerseits über ein Kopplungselement und andererseits über ein Zugelement. Das Kopplungselement dient dabei der Befestigung der Raumfahrzeugmembran-Kopplungseinrichtung an der Raumfahrzeugmembran. Das Zugelement dient der Verbindung des Kopplungselements (und damit der Raumfahrzeugmembran) mit einem Entpackelement (wie beispielsweise einem ausfahrbaren Mast) und der Übertragung der erforderlichen Zugkräfte zum Aufspannen der Raumfahrzeugmembran. Möglich ist auch, dass das Zugelement eine Ecke der Raumfahrzeugmembran an einer Tragstruktur (wie bspw. eine Spule oder ein Befestigungsbereich des Raumfahrzeugs benachbart der Spule) hält.

Im Rahmen der Erfindung ist das Kopplungselement als flächiges Materialstück ausgebildet und das Zugelement ist als flächiger Materialstreifen ausgebildet. Hierbei können das Kopplungselement und das Zugelement aus gleichen oder unterschiedlichen Materialien oder Materialbahnen hergestellt sein, wobei diese flexibel und/oder biegeweich sind. Als Materialien kommen beliebige Gewebebahnen, Folien, Verbundmaterialien, mehrlagige Materialien u. ä. zum Einsatz, wobei auch möglich ist, dass das Material dem Material der Raumfahrzeugmembran entspricht. Hinsichtlich einsetzbarer Materialien wird auch auf die Materialien gemäß dem obigen Stand der Technik für die Raumfahrzeugmembran und Raumfahrzeugmembran-Kopplungseinrichtung verwiesen. Weitere im Rahmen der Erfindung einsetzbare Materialien und ein möglicher Schichtaufbau für die Raumfahrzeugmembran und/oder die Raumfahrzeugmembran-Kopplungseinrichtung sind beispielsweise in der Patentanmeldung DE 10 2021 108 420.2 offenbart, ohne dass eine Einschränkung der Materialien auf diese Beispiele erfolgen soll.

Das flächige Kopplungselement bildet mit einer Ober- oder Unterseite eine Befestigungsfläche für die Raumfahrzeugmembran aus, womit je nach Dimensionierung der Größe der Befestigungsfläche die Größe der Kontaktfläche mit der Raumfahrzeugmembran entsprechend den Anforderungen und der zu übertragenden Zug- und Haltekräfte dimensioniert werden kann. Im Bereich der Befestigungsfläche kann beispielsweise das Kopplungselement mit der Raumfahrzeugmembran vernäht sein. Vorzugsweise erfolgt (zumindest auch) ein Verkleben der Befestigungsfläche des Kopplungselements mit der Raumfahrzeugmembran.

Erstmals findet erfindungsgemäß ein flächiges, längliches Zugelement Einsatz, welches beispielsweise "bandartig" oder streifenförmig ausgebildet ist. Diese flächige Ausgestaltung des Zugelements ermöglicht eine Dimensionierung der Breite des Zugelements entsprechend den Anforderungen an die zu übertragenden Zug- und Haltekräfte. Andererseits basiert die erfindungsgemäße Ausgestaltung auf der Erkenntnis, dass ein flächiges, bandförmiges Zugelement weniger Probleme beim Aufrollen bzw. Aufwickeln und Abrollen bzw. Abwickeln mit sich bringen kann als ein draht-, ketten- oder seilartigen Zugelement. Der Grund hierfür ist beispielsweise, dass bei dem Aufwickeln eines Zugseils an Kreuzungspunkten erhabene Stellen entstehen, die unerwünschte Wechselwirkung mit benachbarten Bauelementen entfalten können und zu erhöhten mechanischen Beanspruchungen des Zugelements und/oder der benachbarten Bauelemente führen können. Zugseile können auch bei Kontakt mit der unter Umständen gepackten Raumfahrzeugmembran zu kleinen Kontaktflächen und hierdurch hervorgerufenen mechanischen Beschädigungen führen. Zugseile erfordern damit unter Umständen ein Auf- und Abwickeln derselben beabstandet von der Raumfahrzeugmembran und/oder gesonderte Führungseinrichtungen für das Auf- und Abwickeln. Hingegen kann das flächige längliche Zugelement beim Aufwickeln großflächige Anlageflächen ausbilden, welche unerwünschte mechanische Beeinträchtigungen durch den Kontakt unterschiedlicher Teilbereiche des Zugelements miteinander oder mit der Raumfahrzeugmembran oder benachbarten Bauelementen reduzieren. Andererseits kann bei einem flächigen Zugelement auch unter Umständen eine verbesserte Führung der Raumfahrzeugmembran genutzt werden, da (anders als bei einem Zugseil) das flächige Zugelement unterschiedliche Massenträgheitsmomente für die Biegung um unterschiedliche Querachsen aufweisen kann.

Im Rahmen der Erfindung weist das längliche Zugelement in einem ersten Bereich ein Anbindungselement für eine Tragstruktur und/oder ein Entpackelement zum Entpacken und/oder Aufspannen der Raumfahrzeugmembran auf. Im Bereich des Anbindungselements können somit die Kräfte für das Befestigen, Halten und/oder Aufspannen der Raumfahrzeugmembran eingeleitet werden. Für die Ausgestaltung des Anbindungselements gibt es im Rahmen der Erfindung vielfältige Möglichkeiten. So ist beispielsweise möglich, dass ein bandförmiges Zugelement zumindest mit einer doppelten Lage ausgebildet ist, wobei die beiden Lagen im Endbereich eine Schlaufe bilden, die das Anbindungselement bildet und durch welche sich dann eine Zugstange erstrecken kann, über deren Länge dann die Krafteinleitung in das Zugelement erfolgen kann.

Erfindungsgemäß sind ein zweiter Endbereich des Zugelements und das Kopplungselement in einem Verbindungsbereich miteinander verbunden. Hierbei sind das flächige Kopplungselement und das flächige Zugelement in dem Verbindungsbereich nicht einfach flach aufeinander aufgelegt und beispielsweise miteinander verklebt, so dass sich das Kopplungselement und das Zugelement in parallelen Ebenen erstrecken. Vielmehr sind das Kopplungselement und das Zugelement in dem Verbindungsbereich im Querschnitt zueinander geneigt:
Erfindungsgemäß weisen das Kopplungselement und das Zugelement in dem Verbindungsbereich einen Querschnitt auf, in dem das Kopplungselement und das Zugelement zwei Schenkel ausbilden. Diese Schenkel sind dann zueinander geneigt. In einem ersten Betriebszustand bilden dabei die Schenkel einen ersten Winkel. Dieser erste Betriebszustand entspricht insbesondere dem entpackten Zustand der Raumfahrzeugmembran. Hingegen bilden die beiden Schenkel in einem zweien Betriebszustand einen zweiten, von dem ersten Winkel abweichenden Winkel. Vorzugsweise ist der zweite Betriebszustand der gepackte Zustand der Raumfahrzeugmembran, wobei in dem zweiten Betriebszustand die Raumfahrzeugmembran auf einer Spule aufgewickelt sein kann.

Für die Wahl der Größe des ersten Winkels und des zweiten Winkels gibt es im Rahmen der Erfindung vielfältige Möglichkeiten, so lange diese unterschiedlich sind. Für einen besonderen Vorschlag der Erfindung beträgt der erste Winkel ungefähr 90°, während der zweite Winkel ungefähr 0° oder ungefähr 180° beträgt. Hierbei ist der angegebene Winkel noch "ungefähr" erfüllt, wenn eine Abweichung von weniger als ± 10°, weniger als ± 5°, weniger als ±2° oder sogar weniger als ± 1° vorhanden ist.

Die Vorgabe dieser unterschiedlichen Winkel für die Schenkel des Kopplungselements und des Zugelements soll beispielhaft erläutert werden für den Fall, dass die Raumfahrzeugmembran-Kopplungseinrichtung die Raumfahrzeugmembran im Bereich einer Ecke derselben an einer Spule hält, die an einer Tragstruktur des Raumfahrzeugs gehalten ist mit einer Orientierung der Spulenachse vertikal zu der Erstreckungsebene der Raumfahrzeugmembran in entpacktem Zustand:
Beträgt der erste Winkel in dem entpackten ersten Betriebszustand 90°, ist das Kopplungselement parallel zu der entpackten Raumfahrzeugmembran (entsprechend der Befestigung über die Befestigungsfläche) angeordnet, während das Zugelement vertikal hierzu, also parallel zur Spulenachse angeordnet ist. Es ist somit möglich, dass für das Abwickeln der Raumfahrzeugmembran und der Raumfahrzeugmembran-Kopplungseinrichtung in dieser Orientierung das Zugelement von der Wicklung desselben von der Spule abgewickelt wird und nach dem vollständigen Abwickeln das Zugelement noch über die gesamte Länge der Spule in Richtung der Längsachse an der Spule gehalten ist.

Hingegen sind in dem zweiten, gepackten Betriebszustand die Schenkel des Kopplungselements und des Zugelements parallel zueinander orientiert, was möglich macht, dass die gepackte Raumfahrzeugmembran, das Kopplungselement und das Zugelement gemeinsam als flächige Wicklung auf der Spule aufgewickelt sind.

Für die Gewährleistung der unterschiedlichen Winkel der beiden Schenkel des Kopplungselements und des Zugelements gibt es im Rahmen der Erfindung vielfältige Möglichkeiten. So kann beispielsweise die Veränderung des Winkels durch eine Flexibilität und/oder Elastizität des Zugelements und/oder des Kopplungselements oder durch ein separates Gelenkelement bereitgestellt werden. Für einen besonderen Vorschlag der Erfindung wird der Freiheitsgrad für die Bildung der unterschiedlichen Winkel der Schenkel über ein Filmscharnier bereitgestellt, welches von dem Zugelement und/oder dem Kopplungselement selber ausgebildet ist. Hierbei wird als ein Filmscharnier ein Materialbereich des Zugelements und/oder Kopplungselements angesehen, welches so biegeweich um eine Biegeachse ist, dass die Biegeachse eine Filmscharnierachse bildet. Zur Bereitstellung dieser Biegeachse kann das Zugelement und/oder das Kopplungselement gezielt eine gegenüber anderen Teilabschnitten der Raumfahrzeugmembran-Kopplungseinrichtung oder des Verbindungsbereichs reduzierte Biegesteifigkeit aufweisen. Dies kann beispielsweise dadurch erfolgen, dass im Bereich des Filmscharniers eine reduzierte Anzahl von Lagen des Zugelements und/oder Kopplungselements vorhanden ist.

Möglich ist auch, dass im Bereich des Filmscharniers das Zugelement und/oder Kopplungselement eine verringerte Dicke und/oder Erstreckung aufweisen, womit diese eine verringerte Biegesteifigkeit aufweisen. Möglich ist auch, dass im Bereich eines Filmscharniers eine zusätzliche Versteifung des Zugelements und/oder Kopplungselements nicht vorhanden ist oder gezielt ein Schwächung vorgesehen ist. Mittels des erfindungsgemäß eingesetzten Filmscharniers wird bei einer Veränderung des Betriebszustands die Veränderung des ersten Winkels in den zweiten Winkel und/oder des zweiten Winkels in den ersten Winkel ermöglicht.

Das Filmscharnier kann unterschiedliche Filmscharnierachsen aufweisen, die insbesondere im Rahmen des Aufspannens und/oder Entpackens der Raumfahrzeugmembran genutzt werden. Für einen Vorschlag der Erfindung ist eine Filmscharnierachse vertikal zu einer Erstreckungsebene der aufgespannten Raumfahrzeugmembran orientiert. Der auf diese Weise mittels des Filmscharniers bereitgestellte Freiheitsgrad der Raumfahrzeugmembran-Kopplungseinrichtung kann insbesondere genutzt werden, wenn für das Entpacken der Raumfahrzeugmembran ein Entpackelement wie ein ausfahrbarer Mast oder ein Seilzug oder anderweitiger Aktuator seine Entfernung von einer Spule, auf der die Raumfahrzeugmembran gepackt ist, verändert. Mit der Veränderung der Entfernung verändert sich die Richtung der auf die Raumfahrzeugmembran-Kopplungseinrichtung applizierten Zugkraft zum Entpacken. Dieser Richtungsänderung kann durch die Verschwenkung um die vertikal zu einer Erstreckungsebene der aufgespannten Raumfahrzeugmembran im vollständig entpackten Zustand orientierte Filmscharnierachse Rechnung getragen werden.

Alternativ oder kumulativ möglich ist, dass eine Filmscharnierachse eines Filmscharniers parallel zu einer Längsachse des aufgespannten Zugelements orientiert ist. Der auf diese Weise vorgegebene Freiheitsgrad kann genutzt werden, um eine unterschiedliche Ausrichtung der Raumfahrzeugmembran in vollständig entpacktem und gespanntem Zustand einerseits und der gepackten Raumfahrzeugmembran während des Aufwickelns derselben auf einer Spule zu gewährleisten.

Problematisch kann die Verbindung des Zugelements und des Kopplungselements in dem Verbindungsbereich sein, da ein Versagen dieser Verbindung während der Mission zu einem Verlust der Funktion der Raumfahrzeugmembran führen kann. Für einen Vorschlag der Erfindung sind/ist das Zugelement und/oder das Kopplungselement so gefaltet, dass diese in dem Verbindungsbereich mehrere aneinander anliegende Lagen bilden. Die mehreren Lagen können eine Art Verstärkung des Zugelements und/oder Kopplungselements darstellen. Alternativ oder kumulativ möglich ist, dass in dem Verbindungsbereich infolge der Faltungen Lagen des Zugelements einerseits und des Kopplungselements andererseits sandwichartig wechselweise aneinander anliegen. Auf diese Weise kann die Fläche, im Bereich welcher eine Verbindung zwischen dem Zugelement und dem Kopplungselement geschaffen wird, vergrößert werden, so dass beispielsweise eine größere Klebefläche für eine bessere Verbindung genutzt werden kann.

Für eine Ausführungsform schlägt die Erfindung vor, dass das Zugelement und das Kopplungselement jeweils einen gefalteten Verbindungsabschnitt aufweisen. In den gefalteten Verbindungsabschnitten können dann das Zugelement und das Kopplungselement flächig miteinander verbunden sein. Möglich ist hierbei, dass in dem ersten Betriebszustand, also dem entpackten und gespannten Zustand der Raumfahrzeugmembran, ein anderer Abschnitt des Zugelements, ein anderer Abschnitt des Kopplungselements und die Verbindungsabschnitte jeweils Flächennormalen ausbilden, die ein Orthogonalsystem bilden. Auf diese Weise kann eine Verbindung des Zugelements und des Kopplungselements mit einer hohen Festigkeit bereitgestellt werden.

Für die konkrete Ausgestaltung der Verbindungsabschnitte gibt es im Rahmen der Erfindung vielfältige Möglichkeiten. Für einen Vorschlag der Erfindung ist der Verbindungsabschnitt des Zugelements eine rechteckige abgewinkelte Endfläche des Zugelements, während dann der Verbindungsabschnitt des Kopplungselements ein Verbindungsstreifen sein kann, der sich von einem beispielsweise ungefähr dreieckigen Grundkörper des Kopplungselements erstreckt, der die Befestigungsfläche für die Raumfahrzeugmembran ausbildet.

Möglich ist, dass ein zusätzliches flächiges, von einem Materialstück gebildetes Verstärkungselement Einsatz findet, welches ebenfalls im Verbindungsbereich angeordnet sein kann, um hier die Festigkeit und die Zuverlässigkeit der Verbindung zu erhöhen.

Für eine Ausgestaltung ist das Kopplungselement im Querschnitt T-förmig gestaltet. Hierbei kann der Vertikalschenkel des T der Verbindung mit dem Zugelement dienen, während die beiden Horizontalschenkel des T auf beiden Seiten des Vertikalschenkels die Befestigungsfläche bereitstellen, die an der Raumfahrzeugmembran befestigt ist. Soll der Vertikalschenkel des T von einer doppelten Lage des Materialstreifens des Kopplungselements ausgebildet sein, kann das Kopplungselement im Bereich einer Faltung um 180° gefaltet sein. Diese Faltung ist dann im Bereich des freien Endes des Vertikalschenkels des T angeordnet. Zur Bereitstellung der beiden Horizontalschenkel des T ist dann der Materialstreifen des Kopplungselements jeweils im Übergangsbereich von dem Vertikalschenkel zu dem Horizontalschenkel über eine Faltung um 90° nach außen gefaltet.

Möglich ist auch, dass das Zugelement in dem Verbindungsbereich zwei äußere und zwei innere Lagen bildet. In diesem Fall sind die beiden inneren Lagen jeweils über eine Faltung um 180° mit einer äußeren Lage verbunden.

Für eine besondere Ausführungsform sind die vorgenannten beiden Lagen des Vertikalschenkels des T-förmigen Querschnitts des Zugelements jeweils zwischen einer inneren Lage und einer äußeren Lage des Kopplungselements angeordnet. Dies ermöglicht eine sehr gute und großflächige Verbindung zwischen dem Zugelement und dem Kopplungselement. In diesem Fall kann eine Faltung, die im Bereich des freien Endes des Vertikalschenkels des von dem Kopplungselement gebildeten T angeordnet ist, parallel zu einer Längserstreckung des Zugelements angeordnet sein. Die Faltungen der Lagen des Zugelements können dann senkrecht zu dieser Faltung und senkrecht zu der Längserstreckung des Zugelements angeordnet sein.

Grundsätzlich ist im Rahmen der Erfindung möglich, dass die Raumfahrzeugmembran-Kopplungseinrichtung lediglich ein Zugelement und ein Kopplungselement aufweist, wobei beliebige zusätzliche Bauelemente und Komponenten vorhanden sein können. Für einen besonderen Vorschlag der Erfindung weist die Raumfahrzeugmembran-Kopplungseinrichtung zwei Zugelemente und zwei Kopplungselemente auf, die unterschiedlich ausgebildet sein können oder vorzugsweise gleich ausgebildet sind. In diesem Fall ist ein erstes Paar eines Zugelements und eines Kopplungselements oberhalb der Raumfahrzeugmembran angeordnet, während ein zweites Paar eines Zugelements und eines Kopplungselements unterhalb der Raumfahrzeugmembran angeordnet ist. Die beiden Zugelemente können dann Zugkräfte in Form eines parallelen Zugkräftepaares bereitstellen, die vorzugsweise mit demselben Versatz zu der Haupterstreckungsebene der Raumfahrzeugmembran wirken, woraus sich eine Resultierende der Zugkräfte ergibt, die in dem gespannten Zustand der Raumfahrzeugmembran in der Haupterstreckungsebene der Raumfahrzeugmembran liegt. Andererseits können die Kopplungselemente der beiden Paare auf unterschiedlichen Seiten an der Raumfahrzeugmembran befestigt sein, womit sich eine Vergrößerung der Befestigungsfläche und damit eine besonders zuverlässige Anbindung ergibt.

In diesem Fall ist möglich, dass die Zugelemente und die Kopplungselemente in dem ersten Betriebszustand, also in dem entpackten und aufgespannten Zustand der Raumfahrzeugmembran, in dem Verbindungsbereich einen Querschnitt mit vier kreuzartig angeordneten Schenkeln bilden, wobei möglich ist, dass die unterschiedlichen Schenkel nicht exakt einen Winkel von 90° bilden und/oder die Schenkel unterschiedliche Längen aufweisen. Vorzugsweise handelt es sich bei einem Paar der sich gegenüberliegenden Schenkel des Kreuzes um die Zugelemente, während das andere Paar der Schenkel von den Kopplungselementen ausgebildet wird.

Eine weitere Lösung der der Erfindung zugrunde liegenden Aufgabe stellt eine Raumfahrzeugmembraneinheit dar, die eine Raumfahrzeugmembran-Kopplungseinrichtung aufweist, wie diese zuvor beschrieben worden ist. Hierbei ist an dem mindestens einen Kopplungselement, nämlich der Befestigungsfläche desselben, eine Raumfahrzeugmembran befestigt. In der Raumfahrzeugmembraneinheit sind sowohl die Raumfahrzeugmembran und die Raumfahrzeugmembran-Kopplungseinrichtung auf eine Spule aufgewickelt. In diesem Fall kann das Zugelement der Raumfahrzeugmembran-Kopplungseinrichtung von außen auf die Wicklung der Raumfahrzeugmembran aufgewickelt, so dass das Zugelement die Wicklung der Raumfahrzeugmembran flächig einschließt und diese zusammenhält und/oder schützt.

Für eine alternative oder kumulative Ausgestaltung kann die Raumfahrzeugmembran auf das Zugelement aufgewickelt sein, so dass das Zugelement radial innenliegend von der Wicklung der Raumfahrzeugmembran angeordnet ist.

Die Erfindung schlägt auch eine Raumfahrzeugmembraneinheit vor, bei der eine Raumfahrzeugmembran drei Ecken aufweist und vorzugsweise in erster Näherung dreieckig ausgebildet ist. In diesem Fall können zwei Ecken der Raumfahrzeugmembran über eine Raumfahrzeugmembran-Kopplungseinrichtung mit einem Entpackelement, insbesondere einem ausfahrbaren Mast, verbunden sein, während die dritte Ecke der Raumfahrzeugmembran über eine Raumfahrzeugmembran-Kopplungseinrichtung mit einer Spule verbunden sein kann, wobei in diesem die beiden erstgenannten Raumfahrzeugmembran-Kopplungseinrichtungen gleich ausgebildet sein können, während die mit der dritten Ecke verbundene Raumfahrzeugmembran-Kopplungseinrichtung abweichend ausgebildet sein kann.

Möglich ist, dass in einer Raumfahrzeugmembraneinheit der zuvor erläuterten Art ein erstes Zugelement und ein erstes Kopplungselement oberhalb der Raumfahrzeugmembran angeordnet sind, wobei in diesem Fall eine Unterseite des ersten Kopplungselements an einer Oberseite der Raumfahrzeugmembran befestigt ist. Des Weiteren sind ein zweites Kopplungselement und ein zweites Zugelement unterhalb der Raumfahrzeugmembran angeordnet. In diesem Fall ist eine Oberseite des zweiten Zugelements an einer Unterseite der Raumfahrzeugmembran befestigt.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch ein Packen einer Raumfahrzeugmembran.
- **Fig. 2**: zeigt in eine Draufsicht eine entpackte dreieckige Raumfahrzeugmembran mit im Bereich der Ecken angeordneten Raumfahrzeugmembran-Kopplungseinrichtungen.
- **Fig. 3**: zeigt eine Raumfahrzeugmembran-Kopplungseinrichtung gemäß dem Detail III in Fig. 2, die der Verbindung der Raumfahrzeugmembran mit einem Entpackungselement dient.
- **Fig. 4**: zeigt eine Raumfahrzeugmembran-Kopplungseinrichtung in einem Detail IV in Fig. 2, die der Verbindung der Raumfahrzeugmembran mit einer Spule dient.
- **Fig. 5**: zeigt in einer räumlichen Darstellung eine auf eine Spule aufgewickelte gepackte Raumfahrzeugmembran mit Raumfahrzeugmembran-Kopplungseinrichtungen.
- **Fig. 6**: zeigt einen Ausschnitt eines Raumfahrzeugs, insbesondere eines Satelliten, mit daran gehaltener Spule mit gepackter und aufgewickelter Raumfahrzeugmembran mit der Verbindung der Raumfahrzeugmembran über RaumfahrzeugmembranKopplungseinrichtungen mit Entpackelementen in Form von ausfahrbaren Masten.
- **Fig. 7**: zeigt in einer räumlichen Darstellung eine Raumfahrzeugmembran in entpacktem und gespanntem Zustand im Bereich der Verbindung einer Ecke mit einer Spule über eine Raumfahrzeugmembran-Kopplungseinrichtung.
- **Fig. 8**: zeigt in einer räumlichen Darstellung eine entpackte und gespannte Raumfahrzeugmembran im Bereich einer Verbindung einer Ecke über eine Raumfahrzeugmembran-Kopplungseinrichtung mit einem Entpackelement in Form eines ausfahrbaren Mastes.
- **Fig. 9**: zeigt eine Raumfahrzeugmembran-Kopplungseinrichtung, insbesondere gemäß Figuren 4 und 7, in einer räumlichen Explosionsdarstellung.
- **Fig. 10**: zeigt die Raumfahrzeugmembran-Kopplungseinrichtung gemäß Fig. 9 in einem ersten Betriebszustand in einer räumlichen Darstellung.
- **Fig. 11**: zeigt ein Detail XI der Raumfahrzeugmembran-Kopplungseinrichtung gemäß Fig. 10.
- **Fig. 12**: zeigt schematisch das Kopplungselement der RaumfahrzeugmembranKopplungseinrichtung gemäß Fig. 10 in dem Verbindungsbereich in einem Vertikalschnitt.
- **Fig. 13**: zeigt schematisch die Raumfahrzeugmembran-Kopplungseinrichtung gemäß Fig. 10 in dem Verbindungsbereich des Kopplungselements und des Zugelements in einem Horizontalschnitt.
- **Fig. 14**: zeigt die Raumfahrzeugmembran-Kopplungseinrichtung gemäß Fig. 9 bis 13 in einem zweiten Betriebszustand in einer räumlichen Darstellung.
- **Fig. 15**: zeigt eine weitere Ausführungsform einer Raumfahrzeugmembran-Kopplungseinrichtung in einer räumlichen Explosionsdarstellung.
- **Fig. 16**: zeigt in einer Draufsicht ein Kopplungselement der RaumfahrzeugmembranKopplungseinrichtung gemäß Fig. 15 in entfaltetem Zustand.
- **Fig. 17**: zeigt schematisch die Raumfahrzeugmembran-Kopplungseinrichtung gemäß Fig. 15 in einem Horizontalschnitt durch den Verbindungsbereich des Zugelements und des Kopplungselements.
- **Fig. 18**: zeigt in einer räumlichen Darstellung die Raumfahrzeugmembran-Kopplungseinrichtung gemäß Fig. 15 in einem ersten Betriebszustand.
- **Fig. 19**: zeigt ein Detail XIX des Verbindungsbereichs der RaumfahrzeugmembranKopplungseinrichtung gemäß Fig. 15 und 18.
- **Fig. 20**: zeigt ein Detail XX des Verbindungsbereichs der Raumfahrzeugmembran-Kopplungseinrichtung gemäß Fig. 15 und 18
- **Fig. 21**: zeigt die Raumfahrzeugmembran-Kopplungseinrichtung entsprechend Fig. 18 in einem ersten Betriebszustand, wobei allerdings hier ein Winkel der Befestigungsfläche des Kopplungselements gegenüber dem Zugelement um eine Filmscharnierachse, die sich vertikal zur Erstreckungsebene der Befestigungsfläche erstreckt, verändert ist.
- **Fig. 22**: zeigt in einer räumlichen Darstellung die Raumfahrzeugmembran-Kopplungseinrichtung gemäß Fig. 15, 18 und 21 in einem zweiten Betriebszustand.

### FIGURENBESCHREIBUNG

In dem vorliegenden Anmeldungstext werden teilweise Komponenten und Bauelemente, die sich hinsichtlich der Geometrie und/oder Funktion entsprechen oder ähneln, mit denselben Bezugszahlen gekennzeichnet. In diesem Fall können die Komponenten oder Bauteile durch einen zusätzlichen Buchstaben a, b, ... voneinander unterschieden sein. In der Beschreibung und in den Patentansprüchen kann auf die Komponenten und Bauelemente ohne oder mit den ergänzenden Buchstaben a, b, ... Bezug genommen werden, womit dann eines der Bauelemente oder Komponenten, mehrere Bauelemente oder Komponenten in beliebiger Anzahl oder sämtliche Bauelemente oder Komponenten gemeint sein können. Sind Paare von Komponenten oder Bauelementen vorhanden, kann die jeweilige Zuordnung zu einem der Paare ergänzend durch den Zusatz "-1" und "-2" gekennzeichnet sein.

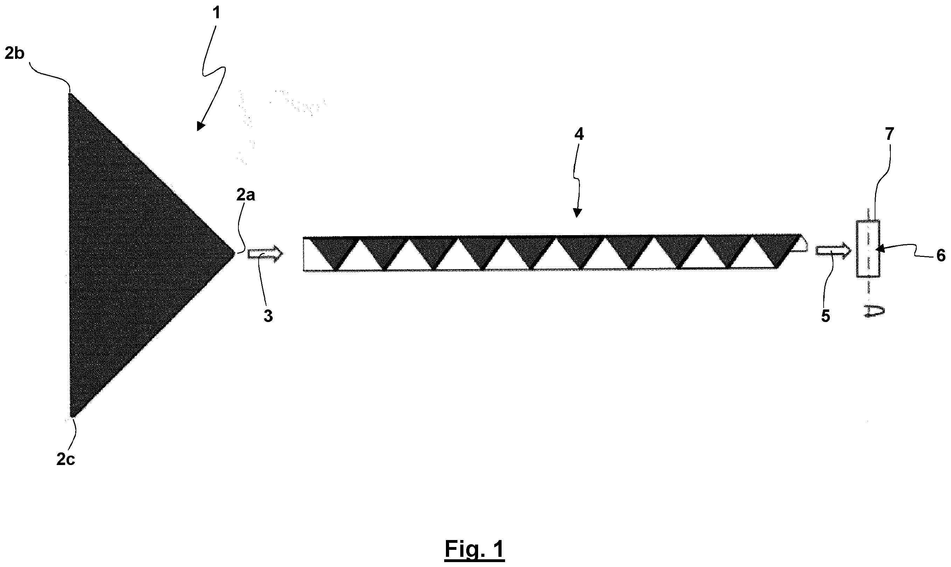

**Fig. 1** zeigt beispielhaft und sehr schematisch ein Packen einer Raumfahrzeugmembran 1, die hier dreieckig ausgebildet ist mit Ecken 2a, 2b, 2c. In einem ersten Packschritt 3 ist die Raumfahrzeugmembran 1 gefaltet zu einem gefalteten Raumfahrzeugmembranstreifen 4. Für das dargestellte Ausführungsbeispiel ist die Raumfahrzeugmembran 1 in dem Packschritt 3 auf beiden Seiten der Höhenachse des Dreiecks, welche durch die Ecke 2a verläuft, zick- zack-förmig gefaltet. In einem weiteren Packschritt 5 wird der Raumfahrzeugmembranstreifen 4 aufgewickelt zu einer Wicklung 6, wobei die Wicklung 6 vorzugsweise auf einer Spule 7 gewickelt wird. Die Erfindung umfasst aber auch beliebige andere Faltschemata und/oder andere Geometrien (auch eine beliebige polygonförmige, insbesondere rechteckige Raumfahrzeugmembran 1) der Raumfahrzeugmembran 1. So kann beispielsweise auch ein zick-zack-förmiges Falten parallel zu dem durch die Ecken 2a, 2b verlaufenden Rand der Raumfahrzeugmembran 1 zu einem Raumfahrzeugmembranstreifen 4 erfolgen. Hinsichtlich weiterer möglicher Faltschemata wird beispielhaft auf DE 10 2017 101 180 A1 verwiesen.

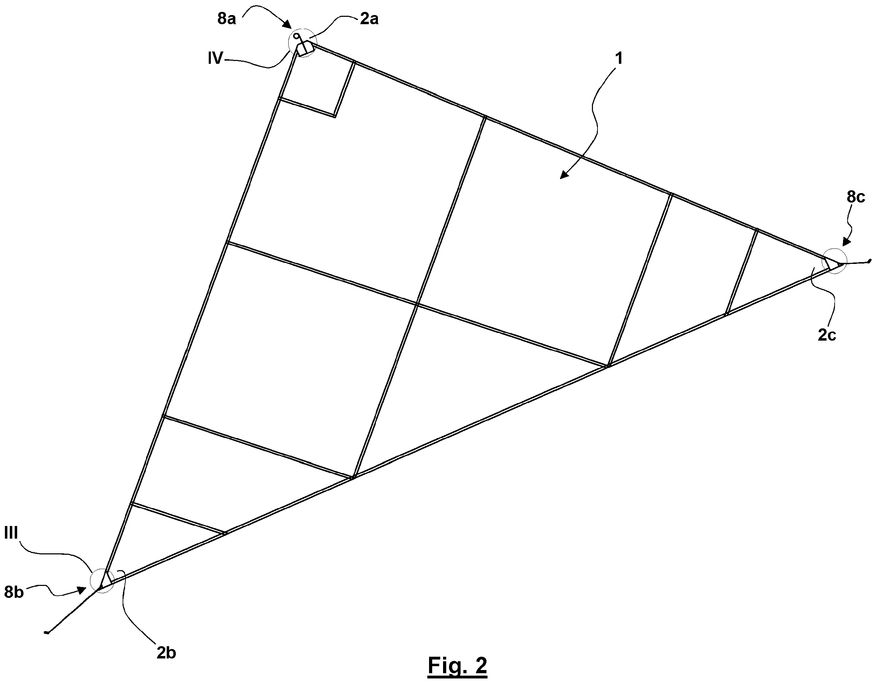

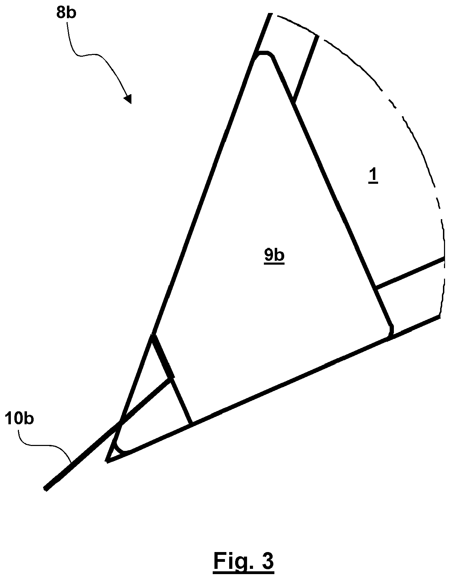

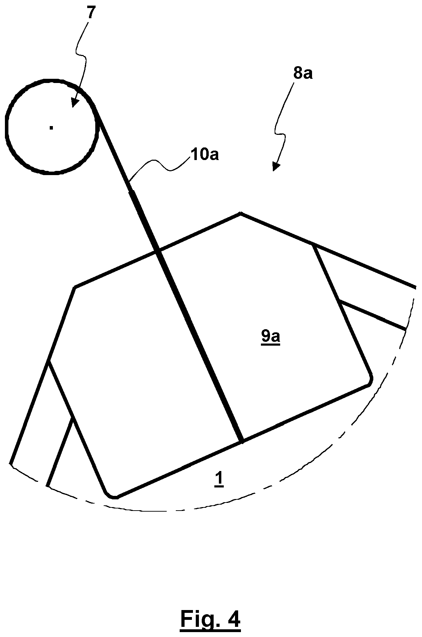

**Fig. 2** zeigt eine hier ebenfalls dreieckige Raumfahrzeugmembran 1 mit in dem Bereich der Ecken 2 angeordneten Raumfahrzeugmembran-Kopplungseinrichtungen 8, die in den Fig. 3 und 4 in den Details III, IV dargestellt sind. Hierbei sind die Raumfahrzeugmembran-Kopplungseinrichtungen 8b, 8c an den Ecken 2b, 2c identisch ausgebildet. Die Raumfahrzeugmembran-Kopplungseinrichtung 8a dient der Kopplung der Raumfahrzeugmembran 1 mit einer Spule, die an einem Grundkörper des Raumfahrzeugs gehalten sein kann. Die Raumfahrzeugmembran-Kopplungseinrichtungen 8b, 8c dienen der Kopplung der Raumfahrzeugmembran 1 mit einem Entpackungselement, bei dem es sich bspw. um einen ausfahrbaren Mast handeln kann.

**Fig. 3** zeigt die Raumfahrzeugmembran-Kopplungseinrichtung 8b (8c). Die Raumfahrzeugmembran-Kopplungseinrichtung 8b verfügt über ein Kopplungselement 9b, welches mit seiner Unterseite großflächig an der Raumfahrzeugmembran 1 befestigt ist, insbesondere durch Verkleben. Des Weiteren verfügt die Raumfahrzeugmembran-Kopplungseinrichtung 8b über ein Zugelement 10b, welches sich in dem dargestellten ersten Betriebszustand quer zu der Zugachse, vertikal zu der Zeichenebene in Fig. 3 und vertikal zu der Erstreckungsebene des Kopplungselements 9b erstreckt.

Gemäß **Fig. 4** weist auch die Raumfahrzeugmembran-Kopplungseinrichtung 8a ein Kopplungselement 9a auf, welches großflächig an der Raumfahrzeugmembran 1 mittels einer von der Unterseite ausgebildeten Befestigungsfläche befestigt, insbesondere verklebt ist, sowie ein Zugelement 10a auf, welches sich vertikal zu der Zeichenebene gemäß Fig. 4 und damit zu dem Kopplungselement 9a erstreckt. In dem von dem Kopplungselement 9a und der Raumfahrzeugmembran 1 abgewandten Endbereich ist das Zugelement 10a an einem Spulenkörper einer Spule 7 befestigt.

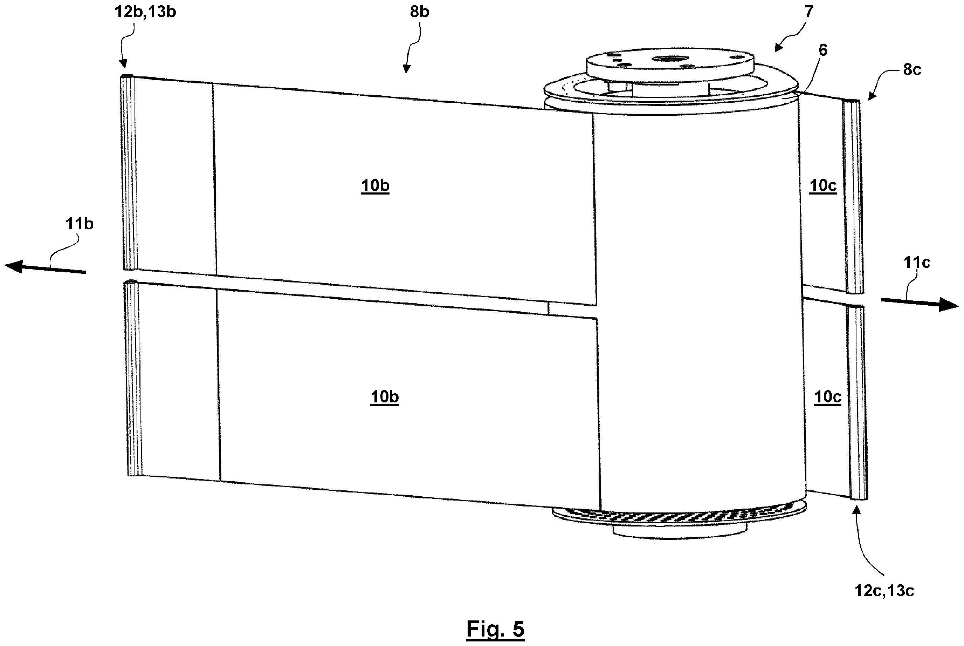

Während die Fig. 2, 3 und 4 die Raumfahrzeugmembran 1 und die Raumfahrzeugmembran-Kopplungseinrichtungen 8 in dem entpackten und aufgespannten Zustand der Raumfahrzeugmembran 1 (und damit die Raumfahrzeugmembran-Kopplungseinrichtungen 8 in dem ersten Betriebszustand) zeigen, zeigt **Fig. 5** die Raumfahrzeugmembran 1 mit den Raumfahrzeugmembran-Kopplungseinrichtungen 8 in einem Zustand, in dem der Raumfahrzeugmembranstreifen 4 auf eine Spule 7 aufgewickelt ist, der auch als zweiter Betriebszustand bezeichnet ist. Hierbei ist auf die Mantelfläche des Spulenkörpers zunächst die Raumfahrzeugmembran-Kopplungseinrichtung 8a flächig aufgewickelt. Hieran anschließend ist der Raumfahrzeugmembranstreifen 4 auf den Spulenkörper und die darauf aufgewickelte Raumfahrzeugmembran-Kopplungseinrichtung 8a aufgewickelt. Zu erkennen ist in Fig. 5, dass sich die Ecken 2b, 2c mit den zugeordneten Raumfahrzeugmembran-Kopplungseinrichtungen 8b, 8c in ungefähr gegenüberliegenden Umfangsbereichen der Wicklung 6 auf der Spule 7 befinden, wobei sich die Zugelemente 10b, 10c ungefähr tangential zu der Wicklung 6 auf der Spule 7 erstrecken. Für ein Entpacken der Raumfahrzeugmembran 1 können Zugkräfte 11b, 11c auf die Zugelement 10 aufbringen. In einem Endbereich bilden den Zugelemente 10 jeweils ein Anbindungselement 12 aus. Für das dargestellte Ausführungsbeispiel ist das Anbindungselement 12 eine von dem Zugelement 10 ausgebildete Schlaufe 13, durch die sich eine Zugstange 14 erstrecken kann, mittels welcher ein Entpackelement die Zugkraft zum Entpacken der Raumfahrzeugmembran 1 aufbringen kann.

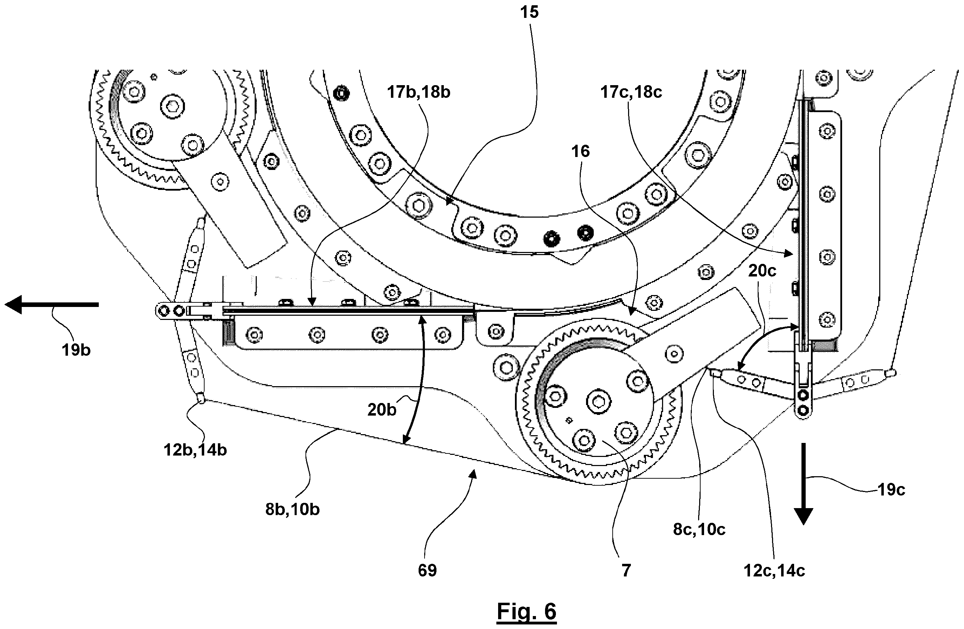

**Fig. 6** zeigt einen Grundkörper 15 eines Raumfahrzeugs. An dem Grundkörper 15 ist die Spule 7 mit der darauf gepackten Raumfahrzeugmembran 1 gehalten, wobei die Spulenachse der Spule 7 vertikal zu der Zeichenebene von Fig. 6 orientiert ist. Der Spule 7 kann eine Rasteinrichtung 16 zugeordnet sein, welche bei dem Entpacken die Drehbewegung des Spulenkörpers um die Spulenachse verrastet, so dass ein Teilabwickeln des Raumfahrzeugmembranstreifens 4 möglich ist und eine weitere Freigabe der Windungen des Raumfahrzeugmembranstreifens 4 nur sukzessive durch Aufbringung der erforderlichen Entpackkräfte möglich ist. Zu erkennen sind in Fig. 6 auch die Zugelemente 10b, 10c der Raumfahrzeugmembran-Kopplungseinrichtungen 8b, 8c. Die Zugelemente 10b, 10c sind in den der Raumfahrzeugmembran 1 abgewandten Endbereichen angelenkt an Entpackelementen 17. Für das dargestellte Ausführungsbeispiel sind die Entpackelemente 17 als Masten 18b, 18c ausgebildet, wobei die Masten 18b, 18c in zueinander um 90° verdrehte Ausfahrrichtungen 19b, 19c ausfahrbar sind. Hierbei bilden die Ausfahrrichtung 19 und die Masten 18 gegenüber den Zugelementen 10 jeweils einen Winkel 20. Die Winkel 20 werden mit dem Ausfahren der Masten 18 in die Ausfahrrichtungen 19 jeweils kleiner. Mit dem Ausfahren der Masten 18 erfolgt ein überlagerter Entpackvorgang, bei dem einerseits die Wicklung des Raumfahrzeugmembranstreifens 4 abgewickelt wird und andererseits die in dem Packschritt 3 herbeigeführten Faltungen der Raumfahrzeugmembran 1 entfaltet werden.

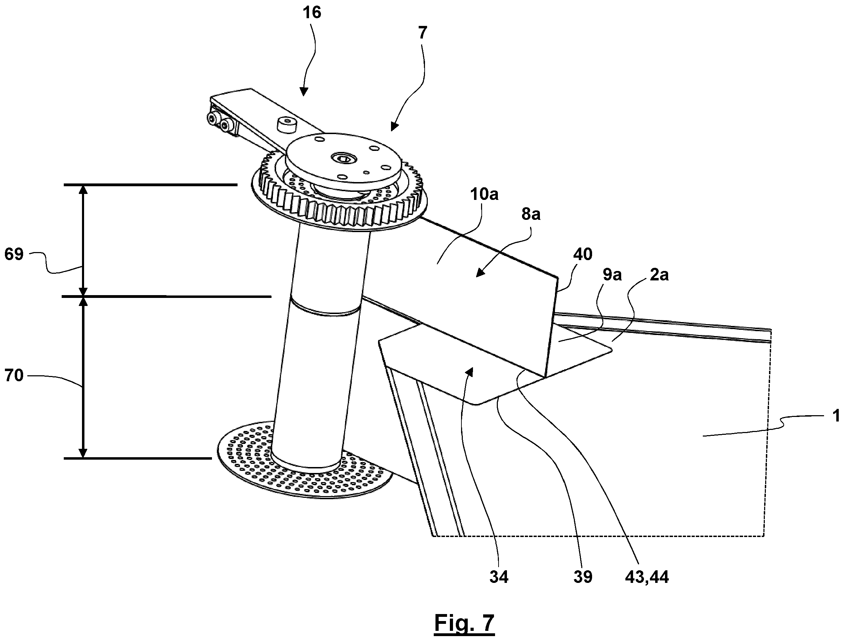

**Fig. 7** zeigt ein Detail der aufgespannten Raumfahrzeugmembran 1 im Bereich der Ecke 2a mit der an der Spule 7 gehaltenen Raumfahrzeugmembran-Kopplungseinrichtung 8a, die sich in dem ersten Betriebszustand befindet.

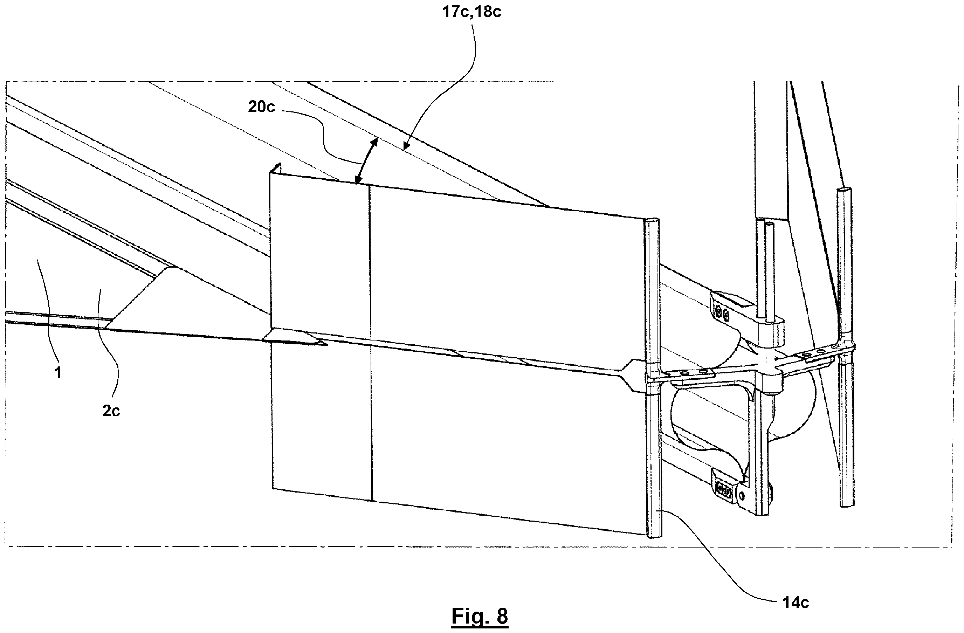

**Fig. 8** zeigt die Verbindung der Raumfahrzeugmembran 1 im Bereich der Ecke 2c über eine Raumfahrzeugmembran-Kopplungseinrichtung 8c mit dem als Mast 18c ausgebildeten Entpackelement 17c.

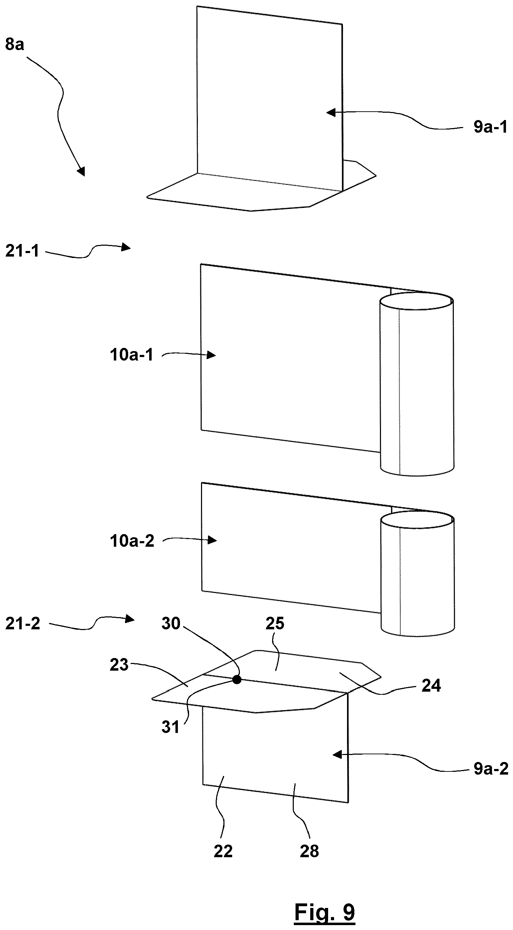

**Fig. 9** zeigt die Raumfahrzeugmembran-Kopplungseinrichtung 8a in einer räumlichen Explosionsdarstellung. Zu erkennen ist hier, dass ein Paar 21-1 eines Kopplungselements 9a-1 und eines Zugelements 10a-1 sowie ein zweites Paar 21-2 eines Kopplungselements 9a-2 und eines Zugelements 10a-2 vorhanden sind. Hierbei kennzeichnet der Zusatz "-1" bzw. "-2" die Zuordnung zu dem jeweiligen Paar 21-1 bzw. 21-2. Im Folgenden kann auf die Komponenten auch ohne den Zusatz "-1" bzw. "-2" Bezug genommen werden. Das Paar 21-1 ist dabei oberhalb der Raumfahrzeugmembran 1 angeordnet, während das Paar 21-2 unterhalb der Raumfahrzeugmembran 1 angeordnet ist. Zu erkennen ist, dass die Komponenten der Paare 21 jeweils dieselbe Form und dieselben Querschnitte aufweisen, wobei möglich ist, dass gemäß Fig. 9 die Erstreckung der Kopplungselemente 9 und Zugelemente 10 der beiden Paare 21 in vertikaler Richtung zu der Haupterstreckungsebene der Raumfahrzeugmembran 1 unterschiedlich sind. Zu erkennen ist, dass die Kopplungselemente 9 jeweils einen T-förmigen Querschnitt aufweisen mit einem Vertikalschenkel 22 sowie zwei Horizontalschenkeln 23, 24.

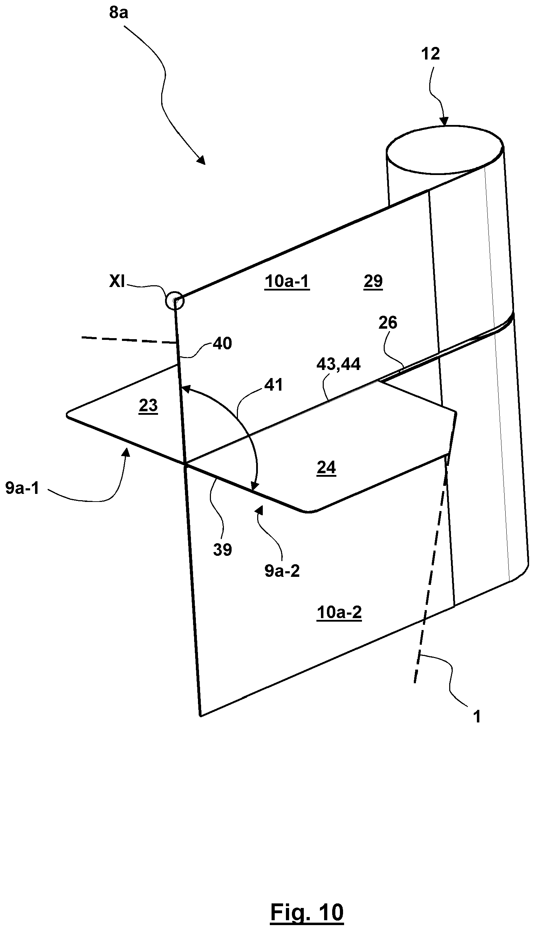

**Fig. 10** zeigt die Raumfahrzeugmembran-Kopplungseinrichtung 8a in dem montierten Zustand in einem ersten, entpackten und gespannten Betriebszustand. Die an von den Horizontalschenkeln 23, 24 der Kopplungselemente 9 ausgebildeten Befestigungsflächen 25 sind mit der Raumfahrzeugmembran 1 verklebt, wobei in Fig. 10 die sich von den Kopplungselementen weg erstreckende Raumfahrzeugmembran 1 lediglich schematisch mittels der gestrichelten Linien angedeutet ist. Die Zugelemente 10 und die Vertikalschenkel 22 der Kopplungselemente 9 erstrecken sich in einer gemeinsamen Ebene, während sich die Horizontalschenkel 23, 24 der Kopplungselemente 9 vertikal zu dieser Ebene erstrecken. Zwischen den Zugelementen 10a-1 und 10a-2 ist ein geringfügiger Spalt 26 ausgebildet, wobei sich die Erstreckungsebene der gespannten Raumfahrzeugmembran 1 durch den Spalt 26 erstreckt. Zu erkennen ist auch das in dem Endbereich von dem Zugelement 10 ausgebildete Anbindungselement 12. Die Raumfahrzeugmembran 1 ist sandwichartig zwischen den Horizontalschenkeln 23, 24 der beiden Kopplungselemente 9a-1 und 9a-2 aufgenommen.

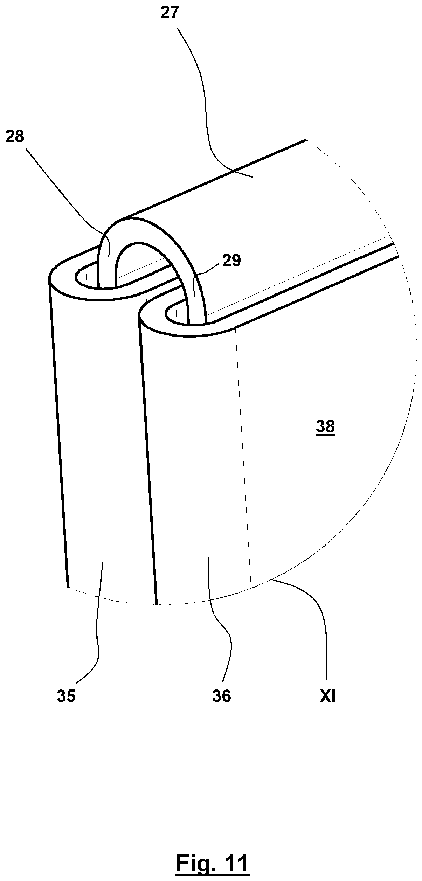

**Fig. 11** zeigt ein Detail XI des Verbindungsbereichs 34 zwischen dem Kopplungselement 9 und dem Zugelement 10.

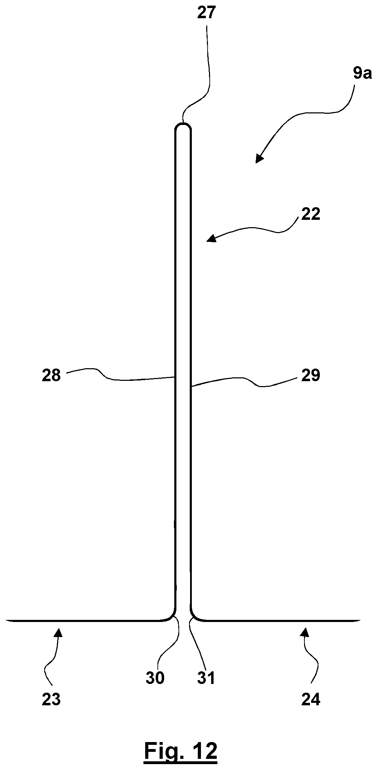

**Fig. 12** zeigt den T-förmigen Querschnitt des Kopplungselements 9. Das Kopplungselement 9 ist durch eine Materialbahn hergestellt, die im Bereich einer Faltung 27 in dem freien Endbereich des Vertikalschenkels 22 um 180° gefaltet ist, womit der Vertikalschenkel 22 zwei Lagen 28, 29 aufweist. Die Lagen 28, 29 sind in den der Faltung 27 gegenüberliegenden Endbereichen über Faltungen 30, 31 um 90° gefaltet zur Bildung der Horizontalschenkel 23, 24.

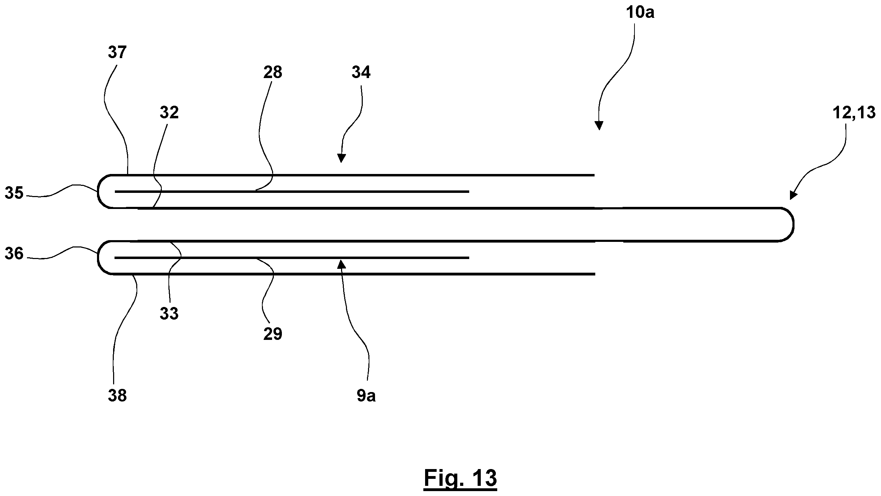

**Fig. 13** zeigt schematisch in einem Horizontalschnitt ein Zugelement 10a mit dem zugeordneten Kopplungselement 9a. Von dem Anbindungselement 12, insbesondere einer Schlaufe 13, ausgehend bildet eine Materialbahn des Zugelements 10a zwei Lagen, die sich als innere Lagen 32, 33 durch den Verbindungsbereich 34 mit dem Kopplungselement 9a erstrecken. In dem Verbindungsbereich 34 sind die Lagen 32, 33 des Zugelements 10a sandwichartig eingeschlossen von den Lagen 28, 29 des Kopplungselements 9a. In den aus den Lagen 28, 29 herausragenden Endbereichen gehen die Lagen 32, 33 über Faltungen 35, 36 über in äußere Lagen 37, 38. Die äußeren Lagen 37, 38 erstrecken sich außenliegend über die Lagen 28, 29 hinaus, so dass abseits der Lagen 28, 29 eine Befestigung, insbesondere Verklebung, der äußeren Lagen 37, 38 mit den inneren Lagen 32, 33 erfolgen kann. Die äußeren Lagen 37, 38 können sich dann beliebig weit in Richtung des Anbindungselements 12 oder der Schlaufe 13 erstrecken.

In dem ersten Betriebszustand der Raumfahrzeugmembran-Kopplungseinrichtung 8a, die in Fig. 7 und Fig. 10 dargestellt ist, bilden die Horizontalschenkel 23, 24 des Kopplungselements 9 (mit der dazwischen angeordneten Raumfahrzeugmembran 1) in einem Querschnitt einen ersten Schenkel 39. Hingegen bildet der Vertikalschenkel 22 mit den beiden Lagen 28, 29 des Kopplungselements 9a gemeinsam mit den Lagen 32, 33, 37, 38 des Zugelements 10a einen zweiten Schenkel 40. Die beiden Schenkel 39, 40 bilden einen ersten Winkel 41, der 90° beträgt. Dieser Winkel 41 zwischen den Schenkeln 39, 40 ermöglicht, dass sich das Zugelement 10a in einer Ebene erstreckt, die parallel zur Spulenachse der Spule 7 orientiert ist und ein flächiges Auf- und Abwickeln des Zugelements 10a von dem Spulenkörper ermöglicht sowie ein Halten des Zugelements 10a über die gesamte Länge des Spulenkörpers. Gleichzeitig gewährleistet der Winkel 41, dass der Schenkel 39 und damit die Befestigungsflächen 25 der Horizontalschenkel 23, 24 der Kopplungselemente 9 in der Ebene der Raumfahrzeugmembran 1 angeordnet sind, so dass diese Ebene vertikal zu der Spulenachse der Spule 7 orientiert sein kann.

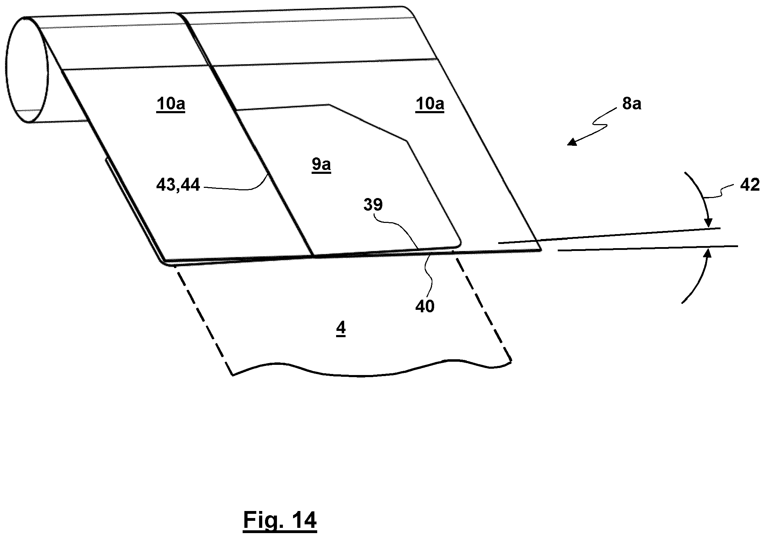

**Fig. 14** zeigt hingegen die Raumfahrzeugmembran-Kopplungseinrichtung 8a in einem zweiten Betriebszustand. In diesem Fall bilden die Schenkel 39, 40 einen Winkel 42, einen Winkel, der ungefähr 0° ist. Der Winkel 42 ermöglicht, dass dann, wenn die Raumfahrzeugmembran 1 zumindest als Raumfahrzeugmembranstreifen 4 gefaltet ist, der Raumfahrzeugmembranstreifen 4 in derselben Ebene angeordnet sein kann wie die Zugelemente 10a und die Kopplungselemente 9a, womit dann auch das flächige Auf- und Abwickeln des Raumfahrzeugmembranstreifens 4 auf der Spule 7 möglich ist. Um die Änderung des Winkels 41, 42 zwischen den Schenkeln 39, 40 zu ermöglichen, bilden die Zugelemente 10 und Kopplungselemente 9 in dem Verbindungsbereich 34 ein Filmscharnier 43 aus, dessen Filmscharnierachse 44 in der Erstreckungsebene der aufgespannten Raumfahrzeugmembran 1 verläuft und parallel zur Längsachse der Zugelemente 10 orientiert ist. Hierbei wird das Filmscharnier 43 und wird die Filmscharnierachse 44 von den Faltungen 30, 31 der Kopplungselemente 9 ausgebildet. In diesem Bereich ist die Wandstärke und Steifigkeit reduziert, da hier lediglich die Endbereiche der Lagen 28, 29 vorhanden sind, während der angrenzende Schenkel 39 von den Horizontalschenkeln 23, 24 der beiden Kopplungselemente 9-1 und 9-2 sowie der Raumfahrzeugmembran 1 gebildet ist und der andere angrenzende Schenkel 40 von den Lagen 28, 29, 32, 33, 37, 38 gebildet ist.

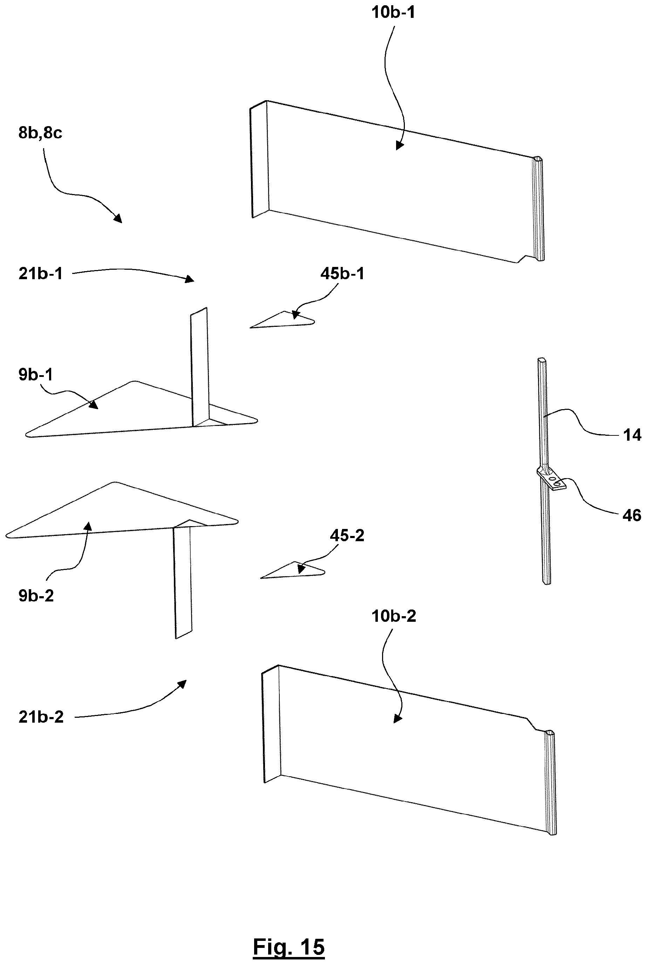

**Fig. 15** zeigt eine Explosionsdarstellung der Raumfahrzeugmembran-Kopplungseinrichtungen 8b, 8c. Auch hier sind jeweils zwei Paare 21b-1 und 21b-2 von Kopplungselementen 9b und Zugelementen 10b vorhanden. Zusätzlich sind noch hier dreieckförmige Verstärkungselemente 45 vorhanden. Die Zugelemente 10b bilden in ihren Endbereichen Anbindungselemente 12 in Form von Schlaufen 13. Durch diese kann sich ein Entpackelement 17, hier eine Zugstange 14 erstrecken, die über einen Flansch 46 beispielsweise an einem ausfahrbaren Mast 18 gehalten sein kann.

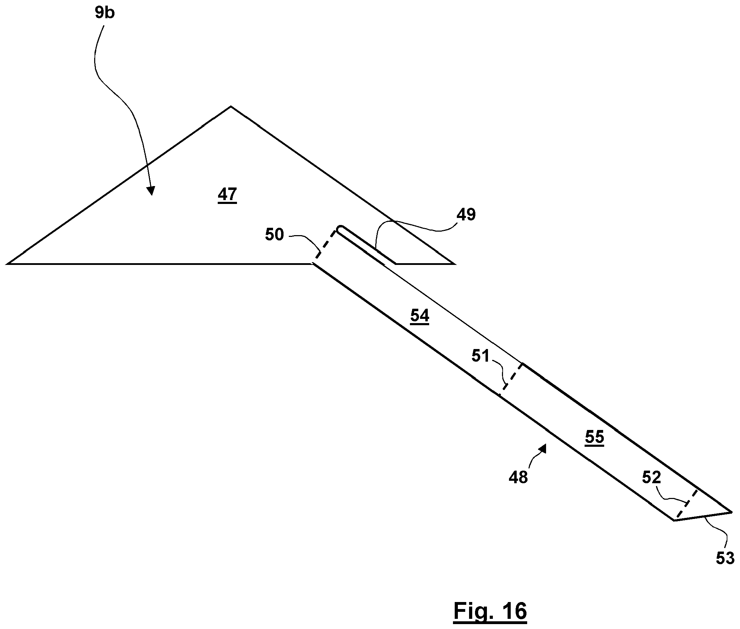

**Fig. 16** zeigt ein Kopplungselement 9b in einem entfalteten Zustand in einer Draufsicht. Die Kopplungseinrichtung 9b weist einen ungefähr dreieckigen Grundkörper 47 auf. Der Grundkörper 47 bildet auf einer Seite die Befestigungsfläche 25 für die Raumfahrzeugmembran 1 aus. Von dem Grundkörper 47 erstreckt sich ein Verbindungsstreifen 48, dessen Längsachse parallel zu einer Ankathete des rechten Winkels des Grundkörpers 47 orientiert ist. Der Verbindungsstreifen 48 geht über einen Einschnitt 49, der parallel zu der vorgenannten Ankathete orientiert ist, in den Grundkörper 47 über, so dass eine Faltung 50 des Verbindungsstreifens 48 gegenüber dem Grundkörper 47 möglich ist, die parallel zu der anderen Ankathete des rechten Winkels des Grundkörpers 47 orientiert ist. Weitere parallele Faltungen 51, 52 des Verbindungsstreifens 48 sind in gleichen Abständen vorgesehen. Durch Erzeugung der Faltung 50 um 90°, der Faltung 51 um 180° in die entgegengesetzte Richtung sowie der Faltung 52 in die Richtung der Faltung 50 kann der Verbindungsstreifen 48 in die in Fig. 15 ersichtliche Form gebracht werden. Eine Stirnkante 53 des Verbindungsstreifens 48 ist dabei so abgeschrägt, dass diese Stirnseite 53 die Hypotenuse des Grundkörpers 47 fortsetzt. Da in der gefalteten Form des Kopplungselements 9b gemäß Fig. 15 der Einschnitt 49 eine Schwächung darstellt, ist der Einschnitt 49 durch das Verstärkungselement 45 geschlossen. Das Verstärkungselement 45 ist dabei vorzugsweise auf den Endbereich des Verbindungsstreifens 48 sowie den benachbarten Materialbereich des Grundkörpers 47 aufgeklebt. Zwischen den Faltungen 50, 51, 52 bildet der Verbindungsstreifen Verbindungsabschnitte 54, 55.

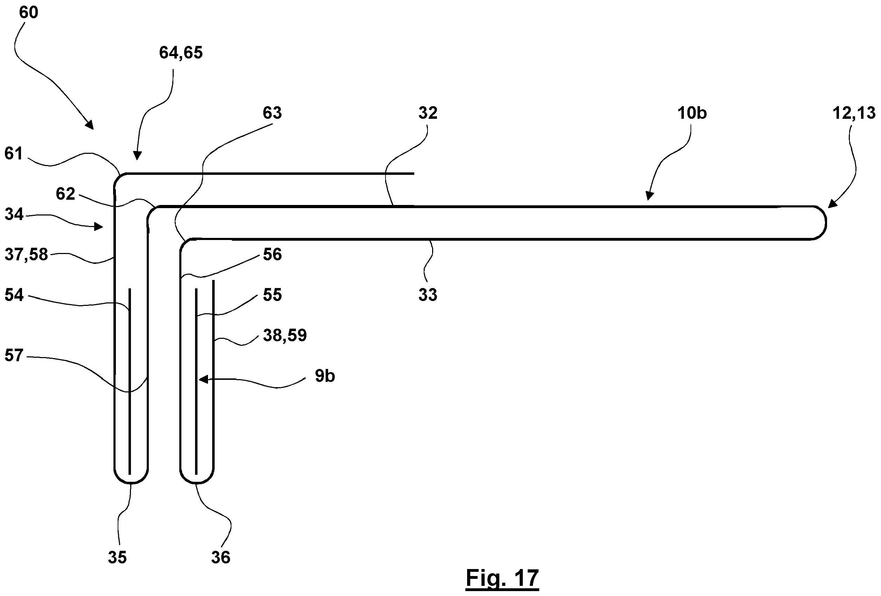

In **Fig. 17** ist zu erkennen, dass das Zugelement 10b (grundsätzlich Fig. 13 entsprechend) in dem einen Endbereich ein Anbindungselement 12 in Form einer Schlaufe 13 ausbildet, von welcher sich zwei Lagen 32, 33 erstrecken. Über die Faltungen 35, 36 gehen die Lagen 32, 33 über in äußere Lagen 37, 38. Hier sind die Verbindungsabschnitte 54, 55 des Kopplungselements 9b sandwichartig zwischen den Lagen 32, 37 bzw. 33, 38 aufgenommen. Die Lagen 32, 33, 37, 38 des Zugelements 10b bilden ebenfalls Verbindungsabschnitte 56, 57, 58, 59, die auf beiden Seiten an den Verbindungsabschnitten 54, 55 des Kopplungselements 9b befestigt, insbesondere angeklebt sind. Die Lagen 32, 33, 37 sind im Bereich einer Ecke 60 des Verbindungsbereichs 34 mit Faltungen 61, 62 und 63 um 90° gefaltet.

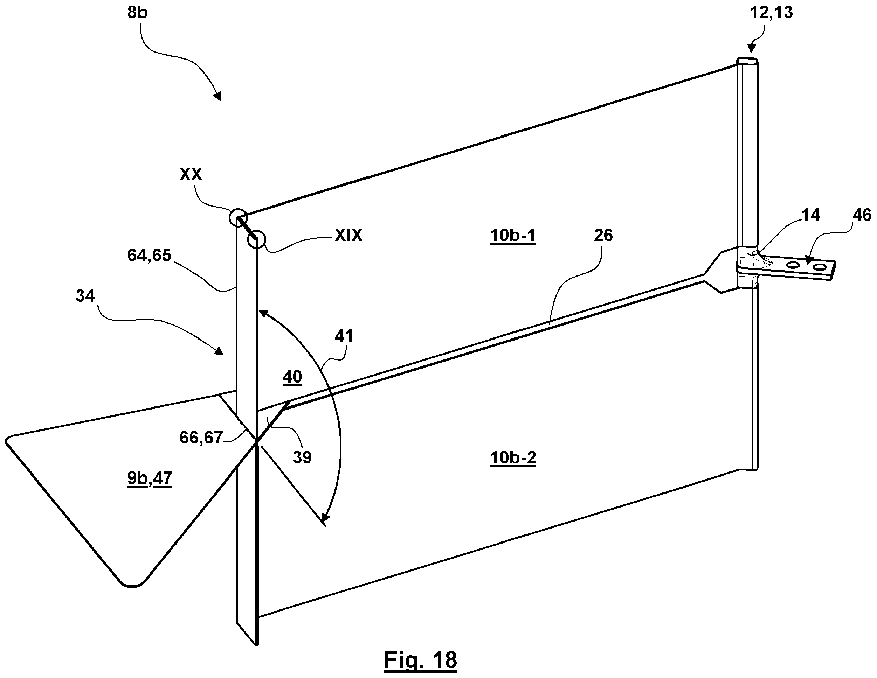

**Fig. 18** zeigt die Raumfahrzeugmembran-Kopplungseinrichtung 8b in einem ersten Betriebszustand. In diesem ersten Betriebszustand sind die Zugelemente 10b mit dem ersten Winkel 41 angeordnet. In dem Verbindungsabschnitt 34 ist der erste Schenkel 39 von dem Grundkörper 47 des Kopplungselements 9b ausgebildet, während der zweite Schenkel 40 von dem Zugelement 10b auf der Seite der Faltungen 61, 62, 63, auf der nicht die Verbindung mit den Verbindungsabschnitten 54, 55 des Kopplungselements 9b angeordnet sind, gebildet ist.

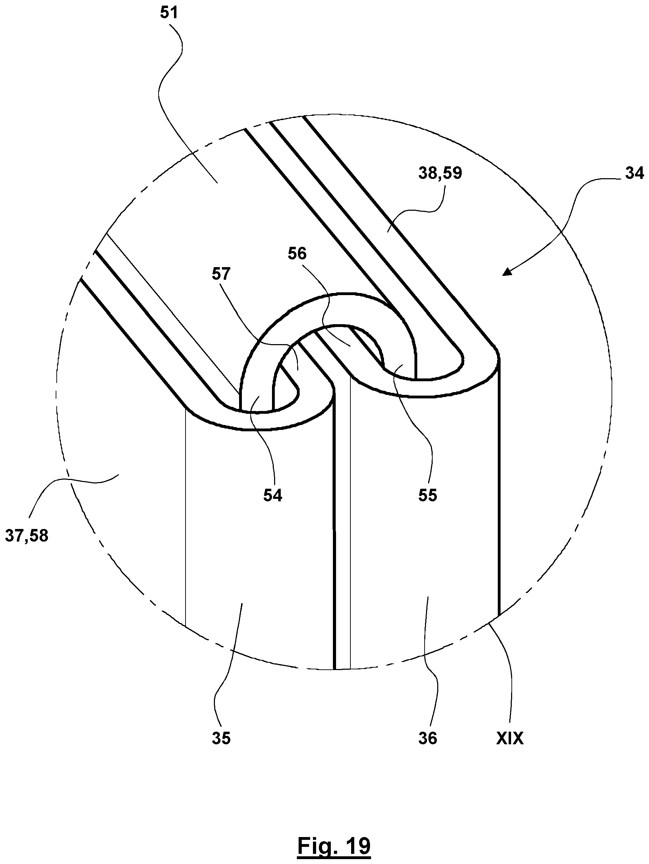

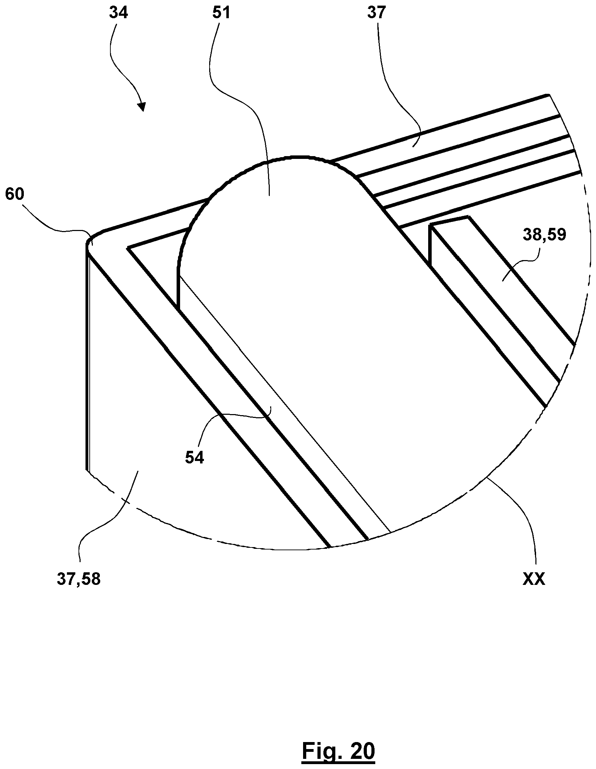

**Fig. 19** und **Fig. 20** zeigen Details XIX und XX der Raumfahrzeugmembran-Kopplungseinrichtung 8b gemäß Fig. 18.

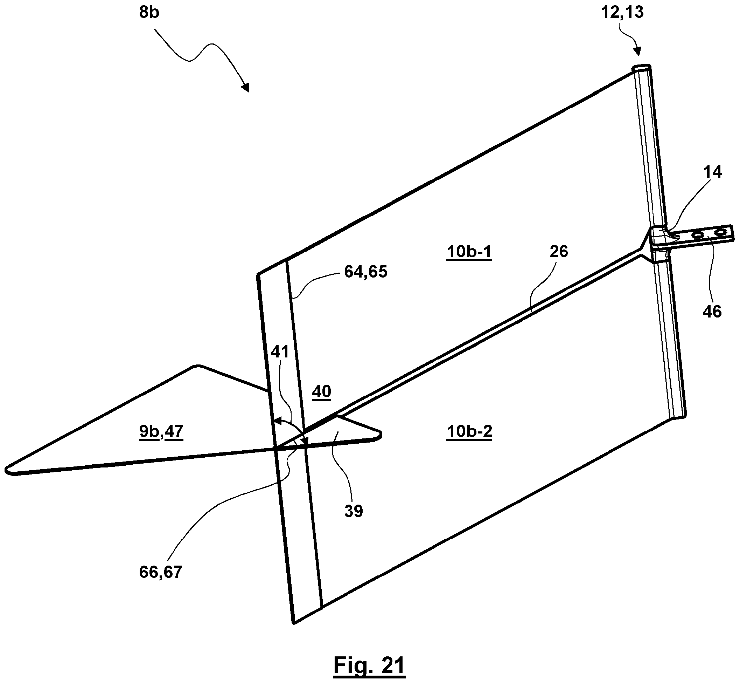

**Fig. 21** zeigt die Raumfahrzeugmembran-Kopplungseinrichtung 8b in dem ersten Betriebszustand, also für den ersten Winkel 41 von 90°. Allerdings ist hier eine Verschwenkung des Kopplungselements 9b um eine Filmscharnierachse 64 eines Filmscharniers 65 erfolgt. Hierbei entspricht die Filmscharnierachse der Achse der Faltungen 60, 61, 62. In Fig. 21 ist der Winkel der Faltungen 61, 62, 63 von dem Betriebszustand gemäß Fig. 17 um 90° geändert worden, so dass die Faltungen 61, 62, 63 beseitigt sind. Die Faltungen 61, 62, 63 bilden somit das Filmscharnier 65 und diese geben die Filmscharnierachse 64 vor. Diese Verschwenkung um die Filmscharnierachse 64 wird genutzt, um Änderungen des Winkels 20 für die Applikation der Zugkraft durch das Entpackelement 17 mit dem Ausfahren des Mastes 18 zu ermöglichen.

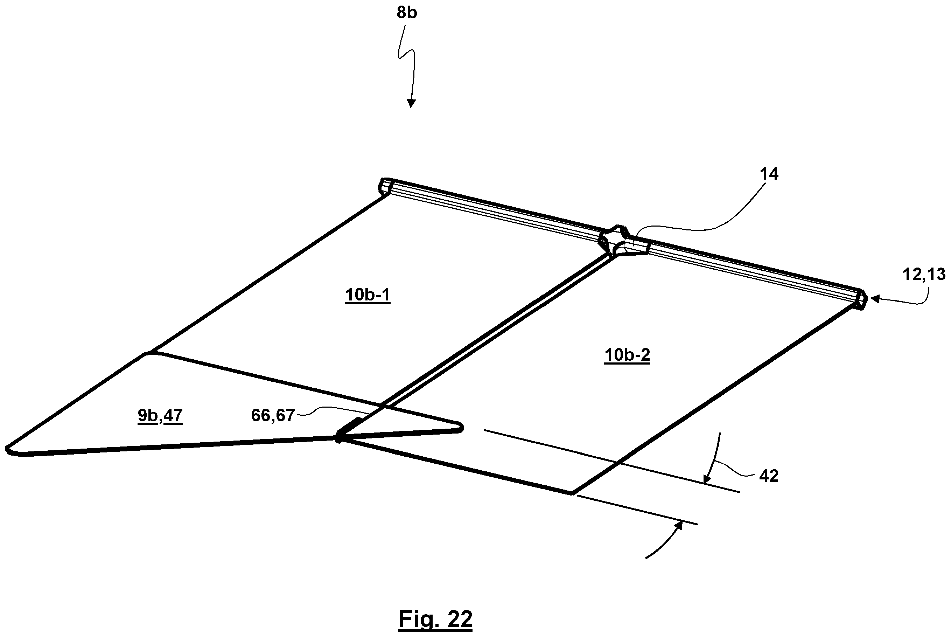

**Fig. 22** zeigt die Raumfahrzeugmembran-Kopplungseinrichtung 8b in dem zweiten Betriebszustand. In dem zweiten Betriebszustand ist der Grundkörper 47 des Kopplungselements 9b an die Haupterstreckungsebene der Zugelemente 10b herangeklappt. Die Schenkel 39, 40 bilden in dem zweiten Betriebszustand einen Winkel 42, der ungefähr 0° beträgt. Die Verschwenkung der Schenkel 39, 40 zur Änderung des Winkels 41 gemäß Fig. 18 in den Winkel 42 gemäß Fig. 22 wird ermöglicht durch ein Filmscharnier 66 mit einer Filmscharnierachse 67. Hierbei wird das Filmscharnier 65 von den Faltungen 50, 52 des Verbindungsstreifens 48 des Kopplungselements 9b bereitgestellt.

Die erfindungsgemäßen Raumfahrzeugmembran-Kopplungseinrichtungen 8 können Einsatz finden in einer Raumfahrzeugmembraneinheit 68, die neben der Raumfahrzeugmembran-Kopplungseinrichtung 8 die daran befestigte Raumfahrzeugmembran 1, eine Spule 7 und ein Entpackelement 17 aufweisen kann.

Sind zwei Paare 21 von Zugelementen 10 und Kopplungselemente 9 vorhanden, die oberhalb und unterhalb der Raumfahrzeugmembran 1 angeordnet sind, können diese unterschiedliche Erstreckungen 69, 70 in Höhenrichtung aufweisen, wie dies schematisch in Fig. 7 dargestellt ist. Durch die Wahl der Erstreckungen 69, 70 in Höhenrichtung kann eine Beeinflussung der Ebene erfolgen, in welcher die Raumfahrzeugmembran 1 in aufgespannte Zustand angeordnet ist. Diese Beeinflussung erfolgt dabei relativ zu der Spule 7 in Richtung der Spulenachse und damit relativ zu dem Raumfahrzeug.

Im Extremfall kann auch eine Erstreckung 69, 70 Null sein, womit dann nur noch lediglich ein paar 21 eines Zugelements 10 und eines Kopplungselements 9 Einsatz findet. Um dennoch ein Aufwickeln auf der Spule gemäß Fig. 7 zu ermöglichen, kann in diesem Fall der Querschnitt durch die mit dem Zugelement 10 und Kopplungselemente 9 gebildete Raumfahrzeugmembran-Kopplungseinrichtung 8 nicht T-förmig ausbildet sein, sondern L-förmig. In diesem Fall ist ein Schenkel des L an der Raumfahrzeugmembran 1 befestigt, während sich der andere Schenkel des L in dem aufgespannten Zustand der Raumfahrzeugmembran 1 parallel zu der Spulenachse erstreckt. In dem zweiten Betriebszustand sind dann die beiden Schenkel des L aufeinandergefaltet.

### BEZUGSZEICHENLISTE

- 1: Raumfahrzeugmembran
- 2: Ecke
- 3: Packschritt
- 4: Raumfahrzeugmembranstreifen
- 5: Packschritt
- 6: Wicklung
- 7: Spule
- 8: Raumfahrzeugmembran-Kopplungseinrichtung
- 9: Kopplungselement
- 10: Zugelement
- 11: Zugkraft
- 12: Anbindungselement
- 13: Schlaufe
- 14: Zugstange
- 15: Grundkörper
- 16: Rasteinrichtung
- 17: Entpackelement
- 18: Mast
- 19: Ausfahrrichtung
- 20: Winkel
- 21: Paar
- 22: Vertikalschenkel
- 23: Horizontalschenkel
- 24: Horizontalschenkel
- 25: Befestigungsfläche
- 26: Spalt
- 27: Faltung
- 28: Lage
- 29: Lage
- 30: Faltung
- 31: Faltung
- 32: Lage
- 33: Lage
- 34: Verbindungsbereich
- 35: Faltung
- 36: Faltung
- 37: Lage
- 38: Lage
- 39: Schenkel
- 40: Schenkel
- 41: Winkel
- 42: Winkel
- 43: Filmscharnier
- 44: Filmscharnierachse
- 45: Verstärkungselement
- 46: Flansch
- 47: Grundkörper
- 48: Verbindungsstreifen
- 49: Einschnitt
- 50: Faltung
- 51: Faltung
- 52: Faltung
- 53: Stirnkante
- 54: Verbindungsabschnitt
- 55: Verbindungsabschnitt
- 56: Verbindungsabschnitt
- 57: Verbindungsabschnitt
- 58: Verbindungsabschnitt
- 59: Verbindungsabschnitt
- 60: Ecke
- 61: Faltung
- 62: Faltung
- 63: Faltung
- 64: Filmscharnierachse
- 65: Filmscharnier
- 66: Filmscharnier
- 67: Filmscharnierachse
- 68: Raumfahrzeugmembraneinheit
- 69: Erstreckung
- 70: Erstreckung

## Patentansprüche

1. Raumfahrzeugmembran-Kopplungseinrichtung (8) zum Befestigen, Halten und/oder Aufspannen einer Raumfahrzeugmembran (1) mit
a) einem von einem flächigen Materialstück ausgebildeten Kopplungselement (9), welches eine Befestigungsfläche (25) für die Raumfahrzeugmembran (1) ausbildet, und
b) einem von einem flächigen Materialstreifen ausgebildeten länglichen Zugelement (10), welches in einem ersten Endbereich ein Anbindungselement (12) für eine Tragstruktur und/oder ein Entpackelement (17) zum Entpacken und/oder Aufspannen der Raumfahrzeugmembran (1) aufweist,
c) wobei das Kopplungselement (9) und ein zweiter Endbereich des Zugelements (10) in einem Verbindungsbereich (34) miteinander verbunden sind,
d) das Kopplungselement (9) und das Zugelement (10) in dem Verbindungsbereich (34) einen Querschnitt aufweisen, in dem das Kopplungselement (9) und das Zugelement (10) zwei Schenkel (39, 40) ausbilden, die in einem ersten Betriebszustand einen ersten Winkel (41) bilden,
**dadurch gekennzeichnet, dass**
e) die zwei Schenkel (39, 40) in einem zweiten Betriebszustand einen zweiten, von dem ersten Winkel (41) abweichenden Winkel (42) bilden.

2. Raumfahrzeugmembran-Kopplungseinrichtung (8) nach Anspruch 1, **dadurch gekennzeichnet, dass** der erste Winkel (41) ungefähr 90° beträgt und der zweite Winkel (42) ungefähr 0° oder ungefähr 180° beträgt, wobei der angegebene Winkel noch "ungefähr" erfüllt ist, wenn eine Abweichung von weniger als ± 10° vorhanden ist.

3. Raumfahrzeugmembran-Kopplungseinrichtung (8) nach Anspruch 1 oder 2, **dadurch gekennzeichnet, dass** das Zugelement (10) und/oder das Kopplungselement (9) ein Filmscharnier (43; 66) ausbilden/ausbildet, welches bei einer Veränderung des Betriebszustandes die Veränderung des ersten Winkels (41) in den zweiten Winkel (42) und/oder des zweiten Winkels (42) in den ersten Winkel (41) ermöglicht.

4. Raumfahrzeugmembran-Kopplungseinrichtung (8) nach Anspruch 3, **dadurch gekennzeichnet, dass** mindestens ein Filmscharnier (43; 66) eine Filmscharnierachse (44; 67) aufweist, die
a) vertikal zu einer Erstreckungsebene der aufzuspannenden Raumfahrzeugmembran (1) orientiert ist und/oder
b) parallel zu einer Längsachse des aufgespannten Zugelements (10) orientiert ist.

5. Raumfahrzeugmembran-Kopplungseinrichtung (8) nach einem der vorhergehenden Ansprüche, **dadurch gekennzeichnet, dass** das Zugelement (10) und/oder das Kopplungselement (9) so gefaltet sind, dass diese in dem Verbindungsbereich (34) mehrere aneinander anliegende Lagen (28, 29, 32, 33, 37, 38) bilden.

6. Raumfahrzeugmembran-Kopplungseinrichtung (8) nach einem der vorhergehenden Ansprüche, **dadurch gekennzeichnet, dass** das Zugelement (10) und das Kopplungselement (9) jeweils einen gefalteten Verbindungsabschnitt (54, 55, 56, 57, 58, 59) aufweisen und die Verbindungsabschnitte (54, 55, 56, 57, 58, 59) des Zugelements (10) und des Kopplungselements (9) flächig miteinander verbunden sind.

7. Raumfahrzeugmembran-Kopplungseinrichtung (8) nach einem der vorhergehenden Ansprüche, **dadurch gekennzeichnet, dass**
a) der Verbindungsabschnitt (56, 57, 58, 59) des Zugelements (10) eine rechteckige abgewinkelte Endfläche des Zugelements ist und/oder
b) der Verbindungsabschnitt (54, 55) des Kopplungselements (9) ein Verbindungsstreifen (48) ist, der sich von einem Grundkörper (47) des Kopplungselements (9) erstreckt, der die Befestigungsfläche (25) für die Raumfahrzeugmembran (1) ausbildet.

8. Raumfahrzeugmembran-Kopplungseinrichtung (8) nach einem der vorhergehenden Ansprüche, **dadurch gekennzeichnet, dass** im Verbindungsbereich (34) ein zusätzliches flächiges, von einem Materialstück gebildetes Verstärkungselement (45) angeordnet ist.

9. Raumfahrzeugmembran-Kopplungseinrichtung (8) nach einem der vorhergehenden Ansprüche, **dadurch gekennzeichnet, dass** das Kopplungselement (9) im Querschnitt T-förmige gefaltet ist, wobei das Kopplungselement (9) im Bereich einer im Bereich des freien Endes des Vertikalschenkels (22) des T angeordneten Faltung (27) um 180° gefaltet ist und jeweils im Übergangsbereich von dem Vertikalschenkel (22) zu den beiden Horizontalschenkeln (23, 24) des T über Faltungen (30, 31) um 90° nach außen gefaltet ist.

10. Raumfahrzeugmembran-Kopplungseinrichtung (8) nach einem der vorhergehenden Ansprüche, **dadurch gekennzeichnet, dass** das Zugelement (10) in dem Verbindungsbereich (25) zwei äußere Lagen (37, 38) und zwei innere Lagen (32, 33) bildet, wobei die beiden inneren Lagen (32, 33) jeweils über eine Faltung (35, 36) um 180° mit einer äußeren Lage (37, 38) verbunden sind.

11. Raumfahrzeugmembran-Kopplungseinrichtung (8) nach Anspruch 10 in Rückbeziehung auf Anspruch 9, **dadurch gekennzeichnet, dass**
a) die beiden Lagen (28, 29) des Vertikalschenkels (22) des T-förmigen Querschnitts des Zugelements (10) jeweils zwischen einer inneren Lage (32; 33) und einer äußeren Lage (37; 38) des Kopplungselements (10) angeordnet sind,
b) sich die im Bereich des freien Endes des Vertikalschenkels (22) des von dem Kopplungselement (9) gebildeten T angeordneten Faltung (27) parallel zu einer Längserstreckung des Zugelements (10) erstreckt und
c) sich die Faltungen (35, 36) der Lagen (32, 37; 33, 38) des Zugelements (10) senkrecht zu der im Bereich des freien Endes des Vertikalschenkels (22) des von dem Kopplungselement (9) gebildeten T angeordneten Faltung (27) und senkrecht zu der Längserstreckung des Zugelements (10) erstrecken.

12. Raumfahrzeugmembran-Kopplungseinrichtung (8) nach einem der vorhergehenden Ansprüche, **dadurch gekennzeichnet, dass** zwei Zugelemente (10) und zwei Kopplungselemente (9) vorhanden sind, wobei ein erstes Paar (21-1) eines Zugelements (10) und eines Kopplungselements (9) oberhalb der Raumfahrzeugmembran (1) angeordnet ist und zweites Paar (21-2) eines Zugelements (10) und eines Kopplungselements (9) unterhalb der Raumfahrzeugmembran (1) angeordnet ist.

13. Raumfahrzeugmembran-Kopplungseinrichtung (8) nach Anspruch 12, **dadurch gekennzeichnet, dass** die Zugelemente (10) und die Kopplungselemente (9) in dem ersten Betriebszustand in dem Verbindungsbereich (34) einen Querschnitt mit vier kreuzartig angeordneten Schenkeln aufweisen.

14. Raumfahrzeugmembran-Kopplungseinrichtung (8) nach einem der vorhergehenden Ansprüche, **dadurch gekennzeichnet, dass** das Anbindungselement (12) in dem ersten Endbereich des Zugelements (10) als Materialschlaufe (13) ausgebildet ist.

15. Raumfahrzeugmembraneinheit (68) mit
a) einer Raumfahrzeugmembran-Kopplungseinrichtung (8) nach einem der vorhergehenden Ansprüche,
b) einer an dem mindestens einen Kopplungselement (9) befestigten Raumfahrzeugmembran (1) und
c) einer Spule (7), auf welche die Raumfahrzeugmembran (1) und die Raumfahrzeugmembran-Kopplungseinrichtung (8) aufgewickelt sind, wobei
ca) das Zugelement (10) von außen auf die die Wicklung (6) der Raumfahrzeugmembran (1) aufgewickelt ist und das Zugelement (10) die Wicklung (6) der Raumfahrzeugmembran (1) flächig einschließt und/oder
cb) die Raumfahrzeugmembran (1) von außen auf eine Wicklung des Zugelements (10) aufgewickelt ist.

16. Raumfahrzeugmembraneinheit (68), insbesondere Raumfahrzeugmembraneinheit nach Anspruch 15, mit
a) einer Raumfahrzeugmembran-Kopplungseinrichtung (8) nach einem der Ansprüche 1 bis 14 und
b) einer an dem mindestens einen Kopplungselement (9) befestigten Raumfahrzeugmembran (1), die drei Ecken (2) aufweist,
c) wobei an zwei Ecken (2b, 2c) der Raumfahrzeugmembran (1) die Raumfahrzeugmembran (1) jeweils über eine Raumfahrzeugmembran-Kopplungseinrichtung (8) mit einem Entpackelement (17) verbunden ist und an einer Ecke (2a) der Raumfahrzeugmembran (1) die Raumfahrzeugmembran (1) über eine Raumfahrzeugmembran-Kopplungseinrichtung (8) mit einer Spule (7) verbunden ist.

17. Raumfahrzeugmembraneinheit (68) nach Anspruch 15 oder 16, **dadurch gekennzeichnet, dass**
a) ein erstes Zugelement (10) und ein erstes Kopplungselement (9) oberhalb der Raumfahrzeugmembran (1) angeordnet sind, wobei eine Unterseite des ersten Kopplungselements (9) an einer Oberseite der Raumfahrzeugmembran (1) befestigt ist, und
b) ein zweites Kopplungselement (9) und ein zweites Zugelement (10) unterhalb der Raumfahrzeugmembran (1) angeordnet sind, wobei eine Oberseite des zweiten Kopplungselements (9) an einer Unterseite der Raumfahrzeugmembran befestigt ist.

## Claims

1. Spacecraft membrane coupling device (8) for fastening, holding and/or stretching or deploying a spacecraft membrane (1) with
a) a coupling element (9) formed by a flat piece of material, which forms a fastening area (25) for the spacecraft membrane (1), and
b) an elongate tension element (10) formed by a flat material strip, which in a first end region comprises a connection element (12) for a support structure and/or an unpacking element (17) for unpacking and/or stretching or deploying the spacecraft membrane (1),
c) wherein the coupling element (9) and a second end region of the tension element (10) are connected to one another in a connection region (34),
d) in the connection region (34) the coupling element (9) and the tension element (10) have a cross section, in which the coupling element (9) and the tension element (10) form two legs (39, 40) that, in a first operating state, form a first angle (41),
**characterized in that**
e) in a second operating state, the two legs (39, 40) form a second angle (42) that differs from the first angle (41).

2. Spacecraft membrane coupling device (8) according to claim 1, **characterized in that** the first angle (41) is approximately 90° and the second angle (42) is approximately 0° or approximately 180°, wherein the specified angle is still "approximately" fulfilled, if there is a deviation of less than ± 10°.

3. Spacecraft membrane coupling device (8) according to claim 1 or 2, **characterized in that** the tension element (10) and/or the coupling element (9) form/forms a film hinge (43; 66), which, in the event of a change of the operating state, enables the change of the first angle (41) into the second angle (42) and/or of the second angle (42) into the first angle (41).

4. Spacecraft membrane coupling device (8) according to claim 3, **characterized in that** at least one film hinge (43; 66) comprises a film hinge axis (44; 67) that
a) is oriented vertically to an extension plane of the spacecraft membrane (1) to be stretched or deployed and/or
b) is oriented parallel to a longitudinal axis of the stretched or deployed tension element (10).

5. Spacecraft membrane coupling device (8) according to one of the preceding claims, **characterized in that** the tension element (10) and/or the coupling element (9) are folded such that they form multiple layers (28, 29, 32, 33, 37, 38) lying against one another in the connection region (34).

6. Spacecraft membrane coupling device (8) according to one of the preceding claims, **characterized in that** the tension element (10) and the coupling element (9) each comprise a folded connection section (54, 55, 56, 57, 58, 59) and the connection sections (54, 55, 56, 57, 58, 59) of the tension element (10) and of the coupling element (9) are connected to one another in an area.

7. Spacecraft membrane coupling device (8) according to one of the preceding claims, **characterized in that**
a) the connection section (56, 57, 58, 59) of the tension element (10) is a rectangular angled end face of the tension element and/or
b) the connection section (54, 55) of the coupling element (9) is a connection strip (48) that extends from a base body (47) of the coupling element (9) that forms the fastening area (25) for the spacecraft membrane (1).

8. Spacecraft membrane coupling device (8) according to one of the preceding claims, **characterized in that** an additional reinforcing element (45) having an area and being formed by a piece of material is arranged in the connection region (34).

9. Spacecraft membrane coupling device (8) according to one of the preceding claims, **characterized in that** the cross section of the coupling element (9) is folded to a T-shape, wherein the coupling element (9) is folded by 180° in the region of a fold (27) arranged in the region of the free end of the vertical leg (22) of the T and is folded in each case in the transition region from the vertical leg (22) to the two horizontal legs (23, 24) of the T outwards by 90° via folds (30, 31).

10. Spacecraft membrane coupling device (8) according to one of the preceding claims, **characterized in that** the tension element (10) forms two outer layers (37, 38) and two inner layers (32, 33) in the connection region (25), wherein the two inner layers (32, 33) are each connected to an outer layer (37, 38) via a fold (35, 36) by 180°.

11. Spacecraft membrane coupling device (8) according to claim 10 in dependence on claim 9, **characterized in that**
a) the two layers (28, 29) of the vertical leg (22) of the T-shaped cross section of the tension element (10) are each arranged between an inner layer (32; 33) and an outer layer (37; 38) of the coupling element (10),
b) the fold (27) arranged in the region of the free end of the vertical leg (22) of the T formed by the coupling element (9) extends parallel to a longitudinal extension of the tension element (10) and
c) the folds (35, 36) of the layers (32, 37; 33, 38) of the tension element (10) extend perpendicular to the fold (27) arranged in the region of the free end of the vertical leg (22) of the T formed by the coupling element (9) and perpendicular to the longitudinal extension of the tension element (10).

12. Spacecraft membrane coupling device (8) according to one of the preceding claims, **characterized in that** there are two tension elements (10) and two coupling elements (9), wherein a first pair (21-1) of a tension element (10) and a coupling element (9) is arranged above the spacecraft membrane (1) and a second pair (21-2) of a tension element (10) and a coupling element (9) is arranged below the spacecraft membrane (1).

13. Spacecraft membrane coupling device (8) according to claim 12, **characterized in that** in the first operating state, the tension elements (10) and the coupling elements (9) comprise a cross section in the connection region (34) with four legs arranged in a cross-like manner.

14. Spacecraft membrane coupling device (8) according to one of the preceding claims, **characterized in that** the connection element (12) is designed as a material loop (13) in the first end region of the tension element (10).

15. Spacecraft membrane unit (68) with
a) a spacecraft membrane coupling device (8) according to one of the preceding claims,
b) a spacecraft membrane (1) fastened to the at least one coupling element (9) and
c) a coil (7) on which the spacecraft membrane (1) and the spacecraft membrane coupling device (8) are wound, wherein
ca) the tension element (10) is wound onto the winding (6) of the spacecraft membrane (1) from the outside and the tension element (10) encloses the winding (6) of the spacecraft membrane (1) with an area and/or
cb) the spacecraft membrane (1) is wound from the outside onto a winding of the tension element (10).

16. Spacecraft membrane unit (68), in particular spacecraft membrane unit according to claim 15, with
a) a spacecraft membrane coupling device (8) according to one of claims 1 to 14 and
b) a spacecraft membrane (1) fastened to the at least one coupling element (9), the spacecraft membrane (1) having three corners (2),
c) wherein at two corners (2b, 2c) of the spacecraft membrane (1) the spacecraft membrane (1) is in each case connected to an unpacking element (17) via a spacecraft membrane coupling device (8) and at one corner (2a) of the spacecraft membrane (1) the spacecraft membrane (1) is connected to a coil (7) via a spacecraft membrane coupling device (8).

17. Spacecraft membrane unit (68) according to claim 15 or 16, **characterized in that**
a) a first tension element (10) and a first coupling element (9) are arranged above the spacecraft membrane (1), wherein a lower side of the first coupling element (9) is fastened to an upper side of the spacecraft membrane (1), and
b) a second coupling element (9) and a second tension element (10) are arranged below the spacecraft membrane (1), wherein an upper side of the second coupling element (9) is fastened to a lower side of the spacecraft membrane.

## Revendications

1. Dispositif de couplage de membrane d'engin spatial (8) pour fixer, maintenir et/ou resserrer une membrane d'engin spatial (1) avec
a) un élément de couplage (9) formé par une pièce plate de matériau, qui forme une surface de fixation (25) pour la membrane d'engin spatial (1), et
b) un élément de tension oblong (10) formé par une bande plate de matériau, qui comporte dans une première partie d'extrémité un élément de liaison (12) pour une structure porteuse et/ou un élément de déballage (17) pour déballer et/ou resserrer la membrane de l'engin spatial (1),
c) l'élément de couplage (9) et une deuxième partie d'extrémité de l'élément de tension (10) étant reliés l'un à l'autre dans une partie de liaison (34),
d) l'élément de couplage (9) et l'élément de tension (10) présentent une section transversale dans la partie de liaison (34), l'élément de couplage (9) et l'élément de tension (10) formant deux branches (39, 40) qui forment un premier angle (41)dans un premier état de fonctionnement,
**caractérisé en ce que**
e) dans un deuxième état de fonctionnement, les deux branches (39, 40) forment un deuxième angle (42) qui s'écarte du premier angle (41).

2. Dispositif de couplage de membrane d'engin spatial (8) selon la revendication 1, **caractérisé en ce que** le premier angle (41) est d'environ 90° et le deuxième angle (42) est d'environ 0° ou environ 180°, l'angle spécifié étant toujours « approximativement » atteint si un écart inférieur à ±10° est présent.

3. Dispositif de couplage de membrane d'engin spatial (8) selon la revendication 1 ou 2, **caractérisé en ce que** l'élément de tension (10) et/ou l'élément de couplage (9) forme(nt) une charnière en film (43 ; 66) qui permet le changement du premier angle (41) en deuxième angle (42) et/ou du deuxième angle (42) en premier angle (41) en cas de changement d'état de fonctionnement.

4. Dispositif de couplage de membrane d'engin spatial (8) selon la revendication 3, **caractérisé en ce qu'**au moins une charnière de film (43 ; 66) présente un axe de charnière de film (44 ; 67) qui
a) est orienté verticalement par rapport à un plan d'extension de la membrane d'engin spatial à étirer (1) et/ou
b) est orienté parallèlement à un axe longitudinal de l'élément de tension (10) resserré.

5. Dispositif de couplage de membrane d'engin spatial (8) selon l'une des revendications précédentes, **caractérisé en ce que** l'élément de tension (10) et/ou l'élément de couplage (9) sont pliés de manière à former plusieurs couches superposées les unes aux autres (28, 29, 32, 33, 37, 38) dans la partie de liaison (34).

6. Dispositif de couplage de membrane d'engin spatial (8) selon l'une des revendications précédentes, **caractérisé en ce que** l'élément de tension (10) et l'élément de couplage (9) présentent chacun une section de liaison pliée (54, 55, 56, 57, 58, 59) et les sections de liaison (54, 55, 56, 57, 58, 59) de l'élément de tension (10) et de l'élément de couplage (9) sont reliées les unes aux autres à plat.

7. Dispositif de couplage de membrane d'engin spatial (8) selon l'une des revendications précédentes,
**caractérisé en ce que**
a) la section de liaison (56, 57, 58, 59) de l'élément de tension (10) est une surface d'extrémité perpendiculaire à l'élément de tension, et/ou
b) la section de liaison (54, 55) de l'élément de couplage (9) est une bande de liaison (48) qui s'étend à partir d'un corps de base (47) de l'élément de couplage (9) et forme la surface de fixation (25) pour la membrane d'engin spatial (1).

8. Dispositif de couplage de membrane d'engin spatial (8) selon l'une des revendications précédentes, **caractérisé en ce qu'**un élément de renforcement (45) plat supplémentaire formé par une pièce de matériau est agencé dans la partie de liaison (34).

9. Dispositif de couplage de membrane d'engin spatial (8) selon l'une des
revendications précédentes, **caractérisé en ce que** l'élément de couplage (9) est plié selon une section transversale en forme de T, l'élément de couplage (9) étant plié à 180° au niveau d'un pli agencé au niveau de l'extrémité libre de la branche verticale (22) du T (27) et étant plié à 90° vers l'extérieur par l'intermédiaire de plis (30, 31), respectivement, dans la zone de transition de la branche verticale (22) aux deux branches horizontales du T (23, 24).

10. Dispositif de couplage de membrane d'engin spatial (8) selon l'une des revendications précédentes, **caractérisé en ce que** l'élément de tension (10) forme dans la partie de liaison (25) deux couches externes (37, 38) et deux couches internes (32, 33), les deux couches internes (32, 33) étant chacune reliées à une couche externe (37, 38) par un pli (35, 36) à 180°.

11. Dispositif de couplage de membrane d'engin spatial (8) selon la revendication 10 en relation avec la revendication 9, **caractérisé en ce que**
a) les deux couches (28, 29) de la branche verticale (22) de la section transversale en forme de T de l'élément de tension (10) sont chacune agencées entre une couche interne (32, 33) et une couche externe (37, 38) de l'élément de couplage (10),
b) le pli (27) agencé sur le T formé par l'élément de couplage (9) s'étend dans la zone de l'extrémité libre de la branche verticale (22) parallèlement à une étendue longitudinale de l'élément de tension (10) et
c) les plis (35, 36) des couches (32, 37; 33, 38) de l'élément de tension (10) s'étendent perpendiculairement au pli (27) agencé au niveau de l'extrémité libre de la branche verticale (22) du T formée par l'élément de couplage (9) et perpendiculairement à l'étendue longitudinale de l'élément de tension (10).

12. Dispositif de couplage de membrane d'engin spatial (8) selon l'une des revendications précédentes, **caractérisé en ce qu'**il y a deux éléments de tension (10) et deux éléments de couplage (9), une première paire (21-1) constituée d'un élément de tension (10) et d'un élément de couplage (9) étant agencée au-dessus de la membrane de l'engin spatial (1) et une deuxième paire (21-2) constituée d'un élément de tension (10) et d'un élément de couplage (9) étant agencée en-dessous la membrane d'engin spatial (1).

13. Dispositif de couplage de membrane d'engin spatial (8) selon la revendication 12, **caractérisé en ce que** les éléments de tension (10) et les éléments de couplage (9) dans le premier état de fonctionnement dans la partie de liaison (34) présentent une section transversale avec quatre branches agencées en croix.

14. Dispositif de couplage de membrane d'engin spatial (8) selon l'une des revendications précédentes, **caractérisé en ce que** l'élément de liaison (12) est forme une boucle de matériau (13) dans la première partie d'extrémité de l'élément de tension (10).

15. Unité de membrane d'engin spatial (68) avec
a) un dispositif de couplage de membrane d'engin spatial (8) selon l'une des revendications précédentes,
b) une membrane d'engin spatial (1) fixée à au moins un élément de couplage (9) et
c) une bobine (7) sur laquelle la membrane d'engin spatial (1) et le dispositif de couplage de membrane d'engin spatial (8) sont enroulés,
ca) l'élément de tension (10) étant enroulé de l'extérieur sur l'enroulement (6) de la membrane d'engin spatial (1) et l'élément de tension (10) entourant l'enroulement (6) de la membrane d'engin spatial (1) à plat et/ou
cb) la membrane d'engin spatial (1) étant enroulée sur un enroulement de l'élément de tension (10) depuis l'extérieur.

16. Unité de membrane d'engin spatial (68), en particulier une unité de membrane d'engin spatial selon la revendication 15, avec
a) un dispositif de couplage de membrane d'engin spatial (8) selon l'une des revendications 1 à 14 et
b) une membrane d'engin spatial (1) fixée à au moins un élément de couplage (9) qui présente trois coins (2),
c) la membrane d'engin spatial (1) étant reliée à un élément de déballage (17) au niveau de deux coins (2b, 2c) de la membrane d'engin spatial (1) via un dispositif de couplage de membrane d'engin spatial (8), et au niveau d'un coin (2a) de la membrane d'engin spatial (1), la membrane d'engin spatial (1) étant reliée à une bobine (7) par l'intermédiaire d'un dispositif de couplage de membrane d'engin spatial (8).

17. Unité de membrane d'engin spatial (68) selon la revendication 15 ou 16, **caractérisée en ce que**
a) un premier élément de tension (10) et un premier élément de couplage (9) sont agencés au-dessus de la membrane d'engin spatial (1), une partie inférieure du premier élément de couplage (9) étant fixée à un côté supérieur de la membrane d'engin spatial (1), et
b) un deuxième élément de couplage (9) et un deuxième élément de tension (10) sont agencés sous la membrane d'engin spatial (1), un côté supérieur du deuxième élément de couplage (9) étant fixé à une face inférieure de la membrane d'engin spatial.
